# EUROPÄISCHE PATENTSCHRIFT

(11) **EP 4 399 492 B1**
(45) Veröffentlichungstag und Bekanntmachung des Hinweises auf die Patenterteilung: **02.07.2025**
(21) Anmeldenummer: 22765855.6
(22) Anmeldetag: 18.08.2022
(51) Int. Cl.: G01D 21/00, G01D 5/244, H04L 67/12

(54) **SIGNALVERARBEITUNGSVORRICHTUNG, DREHMESSEINRICHTUNG, DREHMESSSYSTEM UND FAHRZEUG**
SIGNAL PROCESSING DEVICE, ROTARY MEASURING DEVICE, ROTARY MEASURING SYSTEM, AND VEHICLE
DISPOSITIF DE TRAITEMENT DE SIGNAL, DISPOSITIF DE MESURE ROTATIF, SYSTÈME DE MESURE ROTATIF ET VÉHICULE

(30) Priorität: 08.09.2021 DE 102021123244
(43) Veröffentlichungstag der Anmeldung: 17.07.2024
(73) Patentinhaber: ZF CV Systems Global GmbH, 3006 Bern (CH)
(72) Erfinder: KLOTZ, Eckard, 31812 Bad Pyrmont (DE)
(74) Vertreter: Copi, Joachim
(86) Internationale Anmeldenummer: PCT/EP2022/073025
(87) Internationale Veröffentlichungsnummer: WO 2023/036578

(56) Entgegenhaltungen:
- DE-A1- 102017 130 000
- DE-A1- 102020 103 106
- DE-T5- 112015 002 417
- US-A1- 2003 141 862

## Beschreibung

Die Erfindung betrifft eine Signalverarbeitungsvorrichtung gemäß dem Oberbegriff des Anspruchs 1. Die Erfindung betrifft weiter eine Drehmesseinrichtung, ein Drehmesssystem und ein Fahrzeug.

Eine solche Signalverarbeitungsvorrichtung dient zur Signalverarbeitung für eine Drehmesseinrichtung. Die Drehmesseinrichtung weist einen Drehmesssensor und einen rotativen Maßkörper auf, wobei der rotative Maßkörper eine Merkmalsanzahl von entlang einer Kreisbahn angeordneten Messmerkmalen aufweist, die insbesondere äquidistant angeordnet sind.

Ein Messmerkmal kann je nach Bauart des rotativen Maßkörpers auf unterschiedliche Art ausgebildet sein. Der rotative Maßkörper kann beispielsweise eine geometrische, optische oder magnetische Maßverkörperung in Form von Messmerkmalen aufweisen.

Solche Drehmesseinrichtungen sind allgemein bekannt, insbesondere im Bereich von Maschinen und Fahrzeugen. Mittels einer Drehmesseinrichtung kann eine momentane Drehposition eines rotierenden Teils wie z.B. einer Welle oder eines Rads, bestimmt werden. Weiter können Drehrichtung, Drehgeschwindigkeit und weitere bewegungs- und/oder positionsbezogene Parameter mittels einer Drehmesseinrichtung bestimmt werden. Für eine Drehmesseinrichtung sind unterschiedlichste Drehmesssensoren bekannt, deren Sensorprinzip auf jeweils unterschiedlichem Messprinzip beruht, beispielsweise einem magnetischen, optischen oder induktiven Messprinzip beruht. Bei einem magnetischen Messprinzip kann insbesondere mittels eines Hall-Sensors eine Spannungsänderung ausgegeben werden, die charakteristisch für eine momentane Lage eines Maßkörpers relativ zum Hall-Sensor ist. Ein Hall-Sensor ermöglicht vorteilhaft eine zuverlässige Positionsbestimmung unabhängig von der Drehzahl, insbesondere auch, wenn das rotierende Teil steht oder relativ langsam dreht.

Aus der DE 10 2020 103106 A1 ist ein System zur Kurbelwellenzahn-Codierung eines Kurbelimpulsrads eines Fahrzeugs bekannt.

Zur Signalverarbeitung ist die Signalverarbeitungsvorrichtung ausgebildet aufeinanderfolgende Nachrichtensequenzen zur Verfügung zu stellen. Regelmäßig kann die Art einer Nachrichtensequenz in einem zugeordneten Datenprotokoll festgelegt sein. Datenprotokolle, insbesondere Datenfolgen, für Drehmesseinrichtungen sind ebenfalls bekannt. So kann generell in einem Datenprotokoll oder für eine Datenfolge eine Vorgabevorschrift gegeben sein, die ein Schema von Nachrichten in einer bereitgestellten Abfolge, d.h. in einer sogenannten Nachrichtensequenz, vorgibt, nämlich zum Bereitstellen und Übermitteln von Messdaten der Drehmesseinrichtung.

So kann eine eingangs genannte Signalverarbeitungsvorrichtung zur Ausgabe von Nachrichtensequenzen ausgebildet sein, wobei eine Nachrichtensequenz eine Nachrichtenanzahl von aufeinanderfolgenden Nachrichten aufweist, derart, dass zeitlich aufeinanderfolgende Nachrichten örtlich benachbarten Messmerkmalen zeitlich nacheinander zugeordnet sind, wobei die Messmerkmale mit dem Drehmesssensor wechselwirken, und jede Nachricht in einer aus einer vorbestimmten Anzahl von Nachrichtenarten ausgewählten Nachrichtenart zur Verfügung gestellt wird.

Es ist die eingangs genannte Signalverarbeitungsvorrichtung zur Ausgabe von Nachrichtensequenzen derart ausgebildet, dass eine an einer festen Sequenzposition der Nachrichtensequenz angeordnete Nachricht eine Nachricht vorbestimmter Art ist, welche eine Merkmalseigenschaft des zugeordneten Messmerkmals beschreibt.

Drehmesseinrichtungen, Drehmesssysteme und Signalverarbeitungsvorrichtungen, insbesondere elektronische Signalverarbeitungsvorrichtungen, sind bezüglich der Signalverarbeitung weiterhin verbesserungswürdig. Insbesondere betrifft dies eine möglichst geringe Fehleranfälligkeit und verbesserte Diagnosemöglichkeit bei der Signalverarbeitung.

Wünschenswert ist es daher, eine verbesserte Signalverarbeitungsvorrichtung für eine Drehmesseinrichtung sowie eine Drehmesseinrichtung und ein Drehmessystem anzugeben.

An dieser Stelle setzt die Erfindung an, deren Aufgabe es ist, in verbesserter Weise eine elektronische Signalverarbeitungsvorrichtung und eine Drehmesseinrichtung anzugeben, bei dem die Nachteile des Standes der Technik zumindest teilweise behoben werden. Insbesondere sollen eine möglichst geringe Fehleranfälligkeit und verbesserte Diagnosemöglichkeiten ermöglicht werden.

Die Aufgabe, betreffend die Signalverarbeitungsvorrichtung, insbesondere mit einem Datenprotokoll, wird durch die Erfindung mit einer Signalverarbeitungsvorrichtung des Anspruchs 1 gelöst.

Die Erfindung geht aus von einer eingangs genannten, insbesondere elektronischen, Signalverarbeitungsvorrichtung, bevorzugt für ein Fahrzeug, für eine Drehmesseinrichtung mit einem Drehmesssensor und einem rotativen Maßkörper, wobei der rotative Maßkörper eine Merkmalsanzahl von Messmerkmalen aufweist.

Der Drehmesssensor ist zur Erfassung von Messmerkmalen dem rotativen Maßkörper zugeordnet, insbesondere zur Erfassung der Messmerkmale in Verbindung mit einer rotierenden Bewegung des rotativen Maßkörpers.

Zur Signalverarbeitung ist die Signalverarbeitungsvorrichtung ausgebildet, aufeinanderfolgende Nachrichtensequenzen zur Verfügung zu stellen.

Eine Nachrichtensequenz weist eine Nachrichtenanzahl von Nachrichten auf derart, dass jeweils einer Nachricht jeweils ein Messmerkmal zugeordnet ist, und jeder jeweiligen Nachricht der Nachrichtenanzahl ein jeweils anderes Messmerkmal der Merkmalsanzahl zugeordnet ist.

Eine an einer festen Sequenzposition der Nachrichtensequenz angeordnete Nachricht ist eine Nachricht vorbestimmter Art, welche eine Merkmalseigenschaft des zugeordneten Messmerkmals beschreibt. Dies gilt für mindestens eine an einer festen Sequenzposition innerhalb der Nachrichtensequenz angeordnete Nachricht; es können auch mehrere Nachrichten vorbestimmter Art vorgesehen sein, von denen eine jede jeweils eine Merkmalseigenschaft des zugeordneten Messmerkmals beschreibt.

Erfindungsgemäß ist vorgesehen, dass die Signalverarbeitungsvorrichtung ausgebildet ist, die Nachrichtensequenzen so zu erzeugen, dass die Nachrichtenanzahl und die Merkmalsanzahl zueinander teilerfremd sind.

"Teilerfremdheit" ist im Sinne dieser Anmeldung so zu verstehen, dass es keine natürliche Zahl außer "1" gibt, die sowohl die Nachrichtenanzahl als auch die Merkmalsanzahl teilt.

Allgemein heißen zwei natürliche Zahlen teilerfremd, wenn es keine natürliche Zahl außer der "1" gibt, welche die beiden Zahlen teilt. Als Synonym für Teilerfremd wird auch relativ prim, aus dem Englischen *relatively prime* oder *coprime* benutzt. Wenn zwei natürliche Zahlen also keinen gemeinsamen Primfaktor haben, sind sie teilerfremd. Aus dieser Definition folgt, dass jede natürliche Zahl teilerfremd zu "1" ist, auch die Zahl "1" selbst. Anders ausgedrückt: Ein Bruch zweier teilerfremder Zahlen kann folglich nicht gekürzt werden. Zum Nachweis der Teilerfremdheit berechnet man gewöhnlich den größten gemeinsamen Teiler. Zwei Zahlen sind genau dann teilerfremd, wenn "1" deren größter gemeinsamer Teiler ist. In diesem Sinne ist das Merkmal der Teilerfremdheit zu verstehen, dass es keine natürliche Zahl außer "1" gibt, die sowohl die Nachrichtenanzahl als auch die Merkmalsanzahl teilt.

Das erfindungsgemäße Merkmal der "Teilerfremdheit" gilt bevorzugt für alle Nachrichtensequenzen gleichermaßen.

Dadurch, dass die Nachrichtensequenz bzw. die Nachrichtensequenzen so erzeugt werden, dass die Nachrichtenanzahl und die Merkmalsanzahl zueinander teilerfremd sind, wird eine sich ändernde Zuordnung zwischen einer Nachrichtensequenz und den von der Nachrichtensequenz erfassten Messmerkmalen erreicht; d.h. eine sich bei jedem Messzyklus bzw. bei jeder Rotation des rotativen Maßkörpers sich ändernde Zuordnung.

Anders ausgedrückt; es wird mit dem Konzept der Erfindung der Effekt erreicht, dass einzelne Messmerkmale nicht immer wiederkehrend bei jeder Rotation des rotativen Maßkörpers "übersprungen" werden.

Das "örtlich benachbarte" Messmerkmal" meint bevorzugt ein "unmittelbar benachbartes Messmerkmal", also allgemein meint es das "in einer definierten Abfolge von Merkmalen das nächste Merkmal nach einem vorhergehenden". Entsprechend meint "zeitlich aufeinanderfolgende Nachrichten" bevorzugt "zeitlich direkt aufeinanderfolgende Nachrichten" und meint im Übrigen das zeitliche Analogon - d.h. es handelt sich um eine Nachrichten-Sequenz und eine Messmerkmalsfolge, in der ein Element (Nachricht/Messmerkmal) "n+1" nach einem vorhergehenden "n" folgt. Hintergrund ist die Bindung an eine feste Abfolge oder ein festes Verhältnis einer Zuordnung.

Vor allem besteht die Zuordnung bevorzugt zwischen unmittelbar benachbarten Messmerkmalen und jeweils den zeitlich direkt nacheinander folgenden Nachrichten. Bevorzugt soll also vor allem "unmittelbar" heißen, dass "in der Abfolge von Messmerkmalen das nächste Messmerkmal ohne einem dazwischen liegenden Messmerkmal" folgt und "zeitlich direkt" soll das zeitliche Analogon meinen, bei dem eine Nachricht "ohne eine dazwischenliegende Nachricht" auf die vorhergehende Nachricht folgt. Es kann in einer Abwandlung ggfs. zwischen zwei Elementen (Nachricht/Messmerkmal) ein anderes (ggfs. ungenutzt liegen); aber die Bindung an eine feste Abfolge oder ein festes Verhältnis einer Zuordnung zwischen benachbarten Messmerkmalen und jeweils den zeitlich nacheinander folgenden Nachrichten bleibt.

Kurz gesagt ist damit also gemeint, dass eine Nachrichtensequenz eine Nachrichtenanzahl von aufeinanderfolgenden Nachrichten aufweist, derart, dass zeitlich aufeinanderfolgende Nachrichten - zeitlich nacheinander mit dem Drehmesssensor wechselwirkenden örtlich benachbarten - Messmerkmalen zugeordnet sind.

Die Erfindung führt in einem zweiten Aspekt auf eine Drehmesseinrichtung für ein rotierendes Teil, bevorzugt für ein Fahrzeug, besonders bevorzugt für eine Welle oder ein Rad eines Fahrzeugs, aufweisend: einen Drehmesssensor mit einem Messwertaufnehmer, einen rotativen Maßkörper, und eine Signalverarbeitungsvorrichtung gemäß einem ersten Aspekt der Erfindung, die signalführend mit dem Messwertaufnehmer verbunden ist. Vorteilhaft ist die Signalverarbeitungsvorrichtung in den Drehmesssensor integriert, besonders vorteilhaft zusammen mit dem Messwertaufnehmer in einem Gehäuse untergebracht.

Vorzugsweise weist der rotative Maßkörper eine Merkmalsanzahl von Messmerkmalen auf, insbesondere wobei die Messmerkmale entlang einer Kreisbahn und/oder äquidistant angeordnet sind. Der Drehmesssensor ist zur Erfassung von Messmerkmalen dem rotativen Maßkörper zugeordnet, insbesondere zur Erfassung der Messmerkmale in Verbindung mit einer rotierenden Bewegung des rotativen Maßkörpers.

Die Erfindung führt in einem dritten Aspekt auf ein Drehmesssystem, bevorzugt für ein Fahrzeug, aufweisend mindestens eine Drehmesseinrichtung gemäß dem zweiten Aspekt der Erfindung, und eine Zuordnungseinheit, die ausgebildet ist, die an einer Auswahlposition der Nachrichtensequenz angeordnete Nachricht vorbestimmter Art, insbesondere eine Statusnachricht einer Nachrichtensequenz, einem Messmerkmal zuzuordnen.

Die Erfindung führt in einem vierten Aspekt auf ein Fahrzeug, aufweisend eine Drehmesseinrichtung gemäß dem zweiten Aspekt der Erfindung. Das Fahrzeug ist vorzugsweise ein PKW oder ein Nutzfahrzeug.

Eine Drehmesseinrichtung gemäß dem zweiten Aspekt oder ein Drehmesssystem gemäß dem dritten Aspekt der Erfindung kann besonders vorteilhaft in einem Fahrzeug eingesetzt werden, da durch die Signalverarbeitungsvorrichtung gemäß dem ersten Aspekt der Erfindung in verbesserter Weise eine geringere Fehleranfälligkeit und/oder eine verbesserte Diagnosemöglichkeit der Drehmesseinrichtung erreicht wird. Dadurch kann insbesondere die Sicherheit und Zuverlässigkeit des Fahrzeugs vorteilhaft erhöht werden.

Gemäß einem fünften Aspekt der Erfindung ist ein Verfahren vorgesehen zur Signalverarbeitung für eine Drehmesseinrichtung mit einem Drehmesssensor und einem rotativen Maßkörper, wobei der rotative Maßkörper eine Merkmalsanzahl von Messmerkmalen aufweist, wobei das Verfahren zur Signalverarbeitung den Schritt aufweist: zur Verfügung stellen aufeinanderfolgender Nachrichtensequenzen, insbesondere durch die Signalverarbeitungsvorrichtung, wobei eine Nachrichtensequenz eine Nachrichtenanzahl von aufeinanderfolgenden Nachrichten aufweist, derart, dass zeitlich aufeinanderfolgende Nachrichten - zeitlich nacheinander mit dem Drehmesssensor wechselwirkenden örtlich benachbarten - Messmerkmalen zugeordnet sind, und jede Nachricht in einer aus einer vorbestimmten Anzahl von Nachrichtenarten ausgewählten Nachrichtenart zur Verfügung gestellt wird, und eine an einer festen Sequenzposition der Nachrichtensequenz angeordnete Nachricht eine Nachricht vorbestimmter Art ist, welche eine Merkmalseigenschaft des zugeordneten Messmerkmals beschreibt.

Bei dem Verfahren gemäß dem fünften Aspekt ist vorgesehen, dass die Nachrichtensequenzen so erzeugt werden, dass die Nachrichtenanzahl und die Merkmalsanzahl zueinander teilerfremd sind.

Das Drehmesssystem weist in einer bevorzugten Weiterbildung eine elektronische Steuereinrichtung (ECU) auf, die in einer besonders vorteilhaften Weise im Rahmen einer Rechen- und Datenverarbeitungs-Einrichtung realisiert ist. Die Signalverarbeitungsvorrichtung und/oder die elektronische Steuereinrichtung (ECU) kann vorteilhaft ein Mikro-Controller sein; beispielsweise ein ASIC-Baustein (englisch application-specific integrated circuit, *ASIC,* auch Custom Chip).

Vorteilhaft weist die Signalverarbeitungsvorrichtung und/oder die elektronische Steuereinrichtung (ECU) eine Kommunikations-Schnittstelle auf, beispielsweise eine Antenne oder dergleichen drahtlose Kommunikations-Schnittstelle zum Messwertaufnehmer. Der Messwertaufnehmer des Drehmesssensors ist zur Erfassung von Messmerkmalen dem rotativen Maßkörper zugeordnet, insbesondere zur Erfassung der Messmerkmale in Verbindung mit einer rotierenden Bewegung des rotativen Maßkörpers. Die elektronische Steuereinrichtung kann vorteilhaft eine Zuordnungseinheit und/oder einen Zuordnungsspeicher und/oder eine Diagnoseeinheit umfassen.

Das Verfahren ist vorteilhafterweise in Form eines computerimplementierten Verfahrens ausgebildet, umfassend die Schritte des Verfahrens zur Signalverarbeitung.

Gemäß einem sechsten Aspekt der Erfindung ist ein Computerprogramm-Produkt vorgesehen, wobei das Computerprogramm-Produkt, Befehle umfasset, die bei der Ausführung des Programms durch einen Computer oder dergleichen elektronische Steuereinrichtung (ECU), in einer besonders vorteilhaften Weise im Rahmen einer Rechen- und Datenverarbeitungs-Einrichtung, diese veranlassen, die Schritte des Verfahrens nach dem fünften Aspekt auszuführen.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren. Es ist auch zu verstehen, dass die Signalverarbeitungsvorrichtung, vorzugsweise mit zugeordnetem Datenprotokoll, gemäß dem ersten Aspekt der Erfindung, die Drehmesseinrichtung gemäß dem zweiten Aspekt der Erfindung, das Drehmesssystem gemäß dem dritten Aspekt der Erfindung, das Fahrzeug gemäß dem vierten Aspekt der Erfindung, das Verfahren gemäß dem fünften Aspekt der Erfindung und das Computerprogramm-Produkt gemäß dem sechsten Aspekt der Erfindung gleiche und ähnliche Unteraspekte aufweisen, wie sie insbesondere in den Unteransprüchen festgelegt sind. Insofern wird für die Weiterbildung eines Aspekts der Erfindung auch auf die Weiterbildungen der anderen Aspekte der Erfindung verwiesen.

Vorteilhaft sind die Messmerkmale entlang einer Kreisbahn und/oder äquidistant auf dem rotativen Maßkörper angeordnet.

Ein Messmerkmal wird vorteilhaft durch Eigenschaften des rotativen Maßkörpers gebildet, insbesondere durch die geometrischen, optischen oder magnetischen Eigenschaften des rotativen Maßkörpers. Neben der Erfassung eines kontinuierlichen Messsignals, das die momentane Drehposition des rotierenden Teils beschreibt, hat es sich als vorteilhaft erwiesen, Messmerkmale über charakteristische, insbesondere zuverlässig erfassbare, Stellen am rotativen Maßkörper festzulegen. So kann ein Messmerkmal an einer Stelle einer lokalen Maximal- oder Minimalausprägung des rotativen Maßkörpers angeordnet sein, beispielsweise an einer Stelle einer lokal maximal oder minimal ausgeprägten Magnetisierung oder radialen Ausdehnung (bspw. am Maximum eines Zahnkopfes oder am Minimum eines Zahntals) oder dergleichen. Auch ist eine Kombination möglich, sodass durch jedes lokale Maximum und durch jedes lokale Minimum ein Messmerkmal gebildet ist.

Alternativ oder zusätzlich kann ein Messmerkmal durch andere Eigenschaften des rotativen Maßkörpers gebildet sein, vorteilhaft durch die Stelle einer lokalen Änderung, insbesondere maximalen Änderung, --allgemein einer Eigenschaft oder einem Übergang zwischen Eigenschaften--des rotativen Maßkörpers.

Eine derartige Stelle kann beispielsweise durch eine Zahnflanke an einem Übergang von einem Zahnkopf zu einem Zahntal, oder durch einen Übergang zwischen zwei magnetischen Polen, gebildet sein. Es soll daher verstanden werden, dass zu einer Maßverkörperung auf dem rotativen Maßkörper, beispielsweise einem Zahn oder einer Zahn-Tal-Paarung oder einem Magnetpol, eine oder mehrere Messmerkmale zugeordnet sein können.

Ein rotativer Maßkörper kann in einer bevorzugten Weiterbildung --die auch in Bezug auf die Ausführungsformen als Polrad (engl. Target) näher beschrieben ist-- als Polrad (engl. Target) realisiert werden. Gleichwohl sind unterschiedlichste Realisierungsvarianten dieser oder anderer Ausführungsformen möglich, z.B. als Zahn- oder Lochrad oder magnetisiertes Rad, etwa in Form einer Trommel, Scheibe oder dgl. Eine hier teilweise erfolgende Bezugnahme auf ein Polrad (engl. Target) als Ausführungsbeispiel ist insofern keinesfalls einschränkend sondern beispielhaft zur Erläuterung eines allgemeinen Prinzips zu verstehen.

Als Datenprotokoll wird eine Vorschrift über die Reihenfolge von Nachrichten verstanden, die von der Signalverarbeitungsvorrichtung oder der Drehmesseinrichtung bereitgestellt werden. Das Datenprotokoll kann somit lediglich der Festlegung einer Datenfolge dienen. In Weiterbildungen kann das Datenprotokoll weitere Vorschriften umfassen, beispielsweise zur Festlegung der Länge und/oder der Codierung einzelner Nachrichten.

Vorteilhaft ist die an einer festen Sequenzposition innerhalb der Nachrichtensequenz angeordnete Nachricht vorbestimmter Art, welche eine Merkmalseigenschaft des zugeordneten Messmerkmals beschreibt, eine Statusnachricht gemäß einem Datenprotokoll. Die in dieser vorteilhaften Weiterbildung mindestens eine, an einer festen Sequenzposition innerhalb der Nachrichtensequenz angeordnete vorbestimmte Nachricht jeder Nachrichtensequenz ist also bevorzugt eine Merkmalseigenschaft des zugeordneten Messmerkmals beschreibende Statusnachricht. Es kann dann vorteilhaft mit der Nachrichtensequenz der elektronischen Signalverarbeitungsvorrichtung gemäß dem Konzept der Erfindung erreicht werden, dass nach und nach -d.h. mit jedem Messzyklus bzw. Rotation des rotativen Maßkörpers-- eine Statusnachricht für eine größere Anzahl von Messmerkmalen des rotativen Maßkörpers bereitgestellt wird.

Somit wird vorteilhaft eine bessere Fehlererkennung erreicht; dies gilt vor allem für die - Merkmalseigenschaften eines zugeordneten Messmerkmals beschreibenden - Statusnachrichten.

Insbesondere wird erreicht, dass eine Nachrichtensequenz in einem Messzyklus eine Anzahl von Messmerkmalen zugeordnet ist, die im Vergleich zu Messmerkmalen, die in einem vorherigen Messzyklus bzw. vorherigen Rotation des rotativen Maßkörpers erfasst wurden, verschieden sind. Durch eine derartige wechselnde Zuordnung der aufeinanderfolgenden Nachrichtensequenzen zu den Messmerkmalen -und damit Zuordnung der Nachrichten-- wird vorteilhaft erreicht, dass die Nachricht vorbestimmter Art, insbesondere eine Statusnachricht --die stets an derselben Stelle der Reihenfolge der Nachrichtensequenz angeordnet ist-- ebenfalls eine wechselnde Zuordnung zu einem Messmerkmal erhält. Hierdurch wird vorteilhaft erreicht, dass eine größere Merkmalsanzahl von Messmerkmalen durch eine Nachricht vorbestimmter Art, insbesondere Statusnachricht, erfasst wird.

Vorteilhaft ist die Signalverarbeitungsvorrichtung als elektronische Signalverarbeitungsvorrichtung ausgebildet, insbesondere mit einer Protokollzuordnung gemäß der die Nachricht vorbestimmter Art als Statusnachricht ausgebildet ist. Der Einfachheit ist diese Nachricht vorbestimmter Art im Folgenden als Statusnachricht bezeichnet, wobei grundsätzlich zu berücksichtigen gilt, dass diese im Einzelfall auch unabhängig von einem Datenprotokoll als Nachricht vorbestimmter Art gemäß dem Konzept der Erfindung aufzufassen ist.

Wegen der weiter unten näher erläuterten Auswertung von nicht vorhersehbaren Nachrichtenzeitpunkten ist vorteilhaft jeder Sensor über eine separate, "eigene" elektrische Leitung mit der Signalverarbeitungsvorrichtung als auswertende Vorrichtung verbunden. Bevorzugt ist die Signalverarbeitungsvorrichtung auch durch die Schnittstelle einer elektrischen Leitung zum Sensor, insbesondere einer separaten eigens zur Auswertung eingerichteten elektrischen Leitung, als elektronische Signalverarbeitungsvorrichtung ausgebildet.

Vorzugsweise ist vorgesehen, dass ein Quotient aus Merkmalsanzahl und Nachrichtenanzahl nicht ganzzahlig ist; gemeint ist ein Quotient aus Merkmalsanzahl im Zähler und Nachrichtenanzahl im Nenner. Dass der Quotient aus Merkmalsanzahl und Nachrichtenanzahl nicht ganzzahlig ist, bedeutet also, dass bei einer ganzzahligen Division der Merkmalsanzahl durch die Nachrichtenanzahl stets ein Rest übrigbleibt. Die Nachrichtenanzahl setzt sich somit stets aus einem ganzzahlig teilbaren Teil und einem Rest zusammen. Insbesondere schließt diese ganzzahlige Nichtteilbarkeit auch Fälle ein, in denen die Merkmalsanzahl von Messmerkmalen kleiner ist als die Nachrichtenanzahl von Nachrichten pro Nachrichtensequenz. Anders ausgedrückt, ist gemäß der Weiterbildung die Merkmalsanzahl von Messmerkmalen kein ganzzahliges Vielfaches der Nachrichtenanzahl von Nachrichten pro Nachrichtensequenz.

Dies sei beispielsweise erläutert im Vergleich zu einer allfälligen elektronischen Signalverarbeitungsvorrichtung, die mit einer Nachrichtenanzahl von 10 Nachrichten in einer Nachrichtensequenz bei einer Merkmalsanzahl von 60 Messmerkmalen, eine Merkmalsanzahl 60 aufweist, die durch die Nachrichtenanzahl von 10 teilbar ist.

Bei diesem nachteiligen Beispiel einer allfälligen elektronischen Signalverarbeitungsvorrichtung hat dies zur Folge, dass bei jeder Umdrehung des rotativen Maßkörpers dieselben Messmerkmale einer Nachrichtensequenz zugeordnet werden, und somit auch die Statusnachrichten stets einer - insbesondere signifikant geringeren - Untermenge von Messmerkmalen zugeordnet sind. Somit können insbesondere Fehler, beispielsweise durch eine mechanische Beschädigung oder einen anderen Defekt am rotativen Maßkörper, an Messmerkmalen, die nicht dieser Untermenge angehören, auch nicht festgestellt werden.

Gemäß dem Konzept der Erfindung bzw. insbesondere der vorgenannten Weiterbildung können aber vorteilhaft - selbst bei einer begrenzten Messauflösung bzw. Messdatenverarbeitung, beispielsweise bereits bei einer 3 Bit-Darstellung der Messwerte bzw. Nachrichten - frühzeitig Fehler, wie ein Taumelfehler des rotativen Maßkörpers, erkannt werden.

In einer vorteilhaften Weiterbildung ist ein zugeordnetes Datenprotokoll vorgesehen, das eine Nachrichtensequenz mit einer Nachrichtenanzahl von Nachrichten in einer Reihenfolge vorsieht und die aufeinanderfolgenden Nachrichtensequenzen Teil des Datenprotokolls sind. Ein Datenprotokoll ist zunächst allgemein zu verstehen als Vorgabevorschrift eines Schemas von Nachrichten innerhalb einer zyklisch bereitgestellten Abfolge, d.h. einer sogenannten Nachrichtensequenz, nämlich zum Bereitstellen und Übermitteln von Messdaten.

Vorzugsweise ist die letzte Nachricht der Nachrichtensequenz die Statusnachricht. Dies bedeutet, dass die feste Sequenzposition an der letzten Sequenzposition der Nachrichtensequenz ist. Vorzugsweise sind die übrigen Nachrichten der Nachrichtensequenz Kanalnachrichten. Vorzugsweise ist genau eine Nachricht der Nachrichtensequenz eine Statusnachricht. Eine Statusnachricht beschreibt generell eine Merkmalseigenschaft eines Messmerkmals gemäß dem Konzept der Erfindung und kann insbesondere im Unterschied zu Nachrichten anderen Typs eine Zustandsinformation beschreiben, die Aufschluss über den Betriebszustand, insbesondere über etwaige Fehlerzustände, des Messmerkmals und insbesondere der Drehmesseinrichtung geben.

Es ist gleichwohl allgemein zu verstehen, dass eine "eigentliche Drehmessinformation" der Nachrichten generell nicht in dem Dateninhalt der Nachrichten enthalten sein muss, sondern primär bereits in dem Veranlassen, insbesondere Aussenden, der Nachricht an sich; also vorzugsweise in dem Zeitpunkt liegt, zu dem das Aussenden der Nachricht vom Drehmesssensor veranlasst wird.

Immer wenn eines der Messmerkmale des rotativen Maßkörpers, insbesondere eines Pols oder Zahns eines Polrads, auf seiner Kreisbahn an dem Drehmesssensor "vorbeikommt", sendet der Drehmesssensor eine Nachricht; dies ist zunächst unabhängig von der Art der Nachricht, betrifft also eine vorgenannte Statusnachricht wie auch gleichermaßen eine im Nachgang noch erläuterte Kanalnachricht. Je nach Drehgeschwindigkeit folgen Nachrichten jeglicher Art also auf einer "Leitung", wie z.B. Übertragungs-Kanal oder -Verbindung oder - Schnittstelle, zwischen Drehmesssensor und Signalauswertevorrichtung unterschiedlich schnell aufeinander. Beispielsweise lässt sich insbesondere aus einem zeitlichen Abstand aufeinanderfolgender Nachrichten -bei bekannter Geometrie des rotativen Maßkörpers- ein Maß für seine momentane Drehgeschwindigkeit als Drehmessinformation herleiten.

Der Zeitraum zwischen zwei oder mehreren Nachrichten lässt also-unabhängig von der Art der Nachricht-- Rückschlüsse über die Drehgeschwindigkeit zu. In einer Weiterbildung kann zusätzlich oder alternativ die Drehmessinformation in der Anzahl der von dem Drehmesssensor bereitgestellten Nachrichten liegen. Diese Anzahl lässt Rückschlüsse auf die vom rotativen Maßkörper zurückgelegte Drehbewegung zu, wodurch beispielsweise eine inkrementelle Drehpositionsbestimmung erfolgen kann.

Diese oder andere Art einer Drehmessinformation kann nun vorzugsweise "auch" in einer in einer Kanalnachricht enthalten sein. Eine Kanalnachricht bezeichnet insbesondere eine Nachricht, insbesondere einen Zahlenwert, die eine Drehmessinformation beschreibt. Eine Drehmessinformation ist vorzugsweise ein von dem Drehmesssensor, insbesondere zusammen mit einem Zeitstempel, bereitgestellter Wert und kann -je nach gewählter Betriebsart der Drehmesseinrichtung- beispielsweise eine Lage- oder Geschwindigkeitsinformation sein. Eine Kanalnachricht, insbesondere zusammen mit einem Zeitstempel, beschreibt somit eine Drehmessinformation der Drehmesseinrichtung. In einer Weiterbildung kann die Drehmessinformation lediglich in dem Zeitstempel liegen, zu der eine Nachricht bereitgestellt wird. In einer bevorzugten Weiterbildung kann die Signalverarbeitungsvorrichtung oder der Drehmesssensor zum Bereitstellen eines Zeitstempels für eine Nachricht, insbesondere für jede Nachricht, ausgebildet sein.

Vorzugsweise ist die Nachrichtenanzahl von Nachrichten pro Nachrichtensequenz konstant für jede Nachrichtensequenz. Vorzugsweise weist das Datenprotokoll aufeinanderfolgende Nachrichtensequenzen auf. Vorzugsweise sind die aufeinanderfolgenden Nachrichten einer Nachrichtensequenz aufeinanderfolgenden Messmerkmalen zugeordnet.

Im Rahmen einer bevorzugten Weiterbildung ist vorgesehen, dass für die Signalverarbeitungsvorrichtung das Datenprotokoll ein AK-Protokoll oder ein an das AK-Protokoll angelehntes Datenprotokoll ist. Bevorzugt ist ein Protokoll in Form eines AK-Protokolls, insbesondere in der Version 4.0 gemäß der *"Requirement Specifications for Standardized Interface for Wheel Speed Sensors with Additional Information 'AK-Protokoll".* Dieses bildet ein bevorzugtes Schema von Nachrichten innerhalb einer zyklisch bereitgestellten Abfolge, einer sogenannten Nachrichtensequenz, zum Bereitstellen und Übermitteln von Messdaten ab.

Das AK-Protokoll sieht eine zyklische Abfolge von jeweils einer konstanten, geraden Nachrichtenanzahl von Nachrichten vor. Insbesondere sieht ein solches Protokoll eine Abfolge von neun sogenannten Kanalnachrichten vor, die zur Bestimmung der Drehposition, Drehgeschwindigkeit und/oder weiterer bewegungs- oder positionsbezogener Parameter verwendet werden, sowie von einer Statusnachricht, die zur Bestimmung von Zustandsdaten wie z.B. der Temperatur oder eines sogenannten Peak-to-Peak-Wertes, verwendet wird.

Statusnachrichten, insbesondere solche gemäß dem AK-Protokoll, umfassen beispielsweise Peak-to-Peak-Nachrichten, Temperaturnachrichten oder dergleichen diagnosebezogene Statusnachrichten, die für jedes Messmerkmal bereitgestellt werden können. Eine Statusnachricht ist vorteilhaft als eine Peak-to-Peak-Nachricht oder als eine Temperaturnachricht ausgebildet nach dem Wesen eines AK-Protokolls, insbesondere eines in der Version 4.0.

Eine Nachricht wird insbesondere gemäß dem AK-Protokoll als "word" bezeichnet. Eine Kanalnachricht wird insbesondere gemäß dem AK-Protokoll als "channel selected" oder "channel selected word" bezeichnet. Allgemein in Bezug auf die zuvor erläuterte Weiterbildung des Konzepts der Erfindung im Hinblick auf ein Protokoll ist somit zu verstehen, dass unabhängig von ihrem Auftretenszeitpunkt --unabhängig von der Art der Nachricht-- alle Nachrichten in ihren "words" eine weitere Information übermitteln, deren Bedeutung aber von der Nachrichtenart abhängt. Die vorgenannten Kanalnachrichten sind vorzugsweise "äußerlich" vom selben Format (z.B. 9 Bits) wie die Statusnachrichten. Welche Nachrichtenart jeweils gesendet wird, richtet sich nach dem Datenprotokoll.

Eine Statusnachricht kann gemäß dem AK-Protokoll beispielsweise als "Peak-Peak Information Word", "Temperature Information Word", "Overtemperature Word", "EEPROM-Write Required Word" oder "EEPROM-Write Counter Exceeded Word" bezeichnet werden. Ein AK-Protokoll wird beispielsweise in den ATS-Sensoren des Unternehmens Allegro MicroSystems, Manchester, NH, USA, beispielsweise in dem Modell ATS604, eingesetzt.

Im Rahmen einer besonders bevorzugten Weiterbildung ist vorgesehen, dass
- die Nachrichtenanzahl eine Primzahl ist. Vorzugsweise ist vorgesehen, dass die Nachrichtenanzahl eine in der Primfaktorzerlegung der Merkmalsanzahl nicht vorkommende Primzahl ist. Besonders vorteilhaft ist vorgesehen, dass die Nachrichtenanzahl die kleinste der in der Primfaktorzerlegung nicht vorkommenden Primzahlen ist oder eine Primzahl, die kleiner ist als jede der in der Primfaktorzerlegung vorkommenden Primzahlen. In einer Weiterbildung, in der die Nachrichtenanzahl die kleinste in der Primfaktorzerlegung der Merkmalsanzahl nicht vorkommende Primzahl ist, wird vorteilhaft erreicht, dass relativ schnell sämtliche Messmerkmale erfasst werden.

Der weitere Vorteil wird deutlich, wenn man rotative Maßkörper, wie beispielsweise Polräder mit z.B. 5x7=35 oder 7x11=77 Zähnen betrachtet. In beiden Fällen erreicht man zwar mit einer Nachrichtenanzahl von 13 oder dergleichen Primzahl bereits den grundsätzlich vorteilhaften Effekt des Konzepts der Erfindung. Aber mit einer Nachrichtenanzahl von 2 eine noch schnellere Erfassung der Eigenschaften aller Pole, insbesondere Zähne eines der oben genannten Polräder, bzw. allgemein der Messmerkmale eines rotativen Maßkörpers - auch eine Nachrichtenanzahl von 3 wäre hier mit dem genannten weiteren Vorteil einer noch schnelleren Erfassung der Eigenschaften möglich.

Im Rahmen einer Weiterbildung ist vorgesehen, dass die Nachrichtenanzahl die nächsthöhere Primzahl des höchsten Faktors des Primzahlprodukts der Merkmalsanzahl ist. Dies bedeutet, dass die Nachrichtenanzahl eine Primzahl ist, die nicht als Faktor im Primzahlprodukt der Merkmalsanzahl vorkommt.

Mit Primzahlprodukt ist die mittels Primfaktorzerlegung ermittelte Zerlegung der Merkmalsanzahl in ihre Primfaktoren gemeint. Wenn beispielsweise, wie bei einer Merkmalsanzahl von 60, die Primfaktorzerlegung ein entsprechendes Primzahlprodukt von 2 X 2 X 3 X 5 ergibt, resultiert daraus die Primzahl 5 als höchster Faktor des Primzahlprodukts, und entsprechend wäre gemäß dieser Weiterbildung die Primzahl 7 als nächsthöhere Primzahl die Nachrichtenanzahl von Nachrichten der Nachrichtensequenz. Mit einer Nachrichtenanzahl gemäß dieser Weiterbildung wird vorteilhaft erreicht, dass eine Statusnachricht für tatsächlich jedes Messmerkmal des rotativen Maßkörpers, wenn auch erst nach einer größeren Anzahl von Umdrehungen, erzeugt wird.

Bei einer Primzahl, die - im Unterschied zu der hier beschriebenen Weiterbildung - Teil des Primzahlprodukts ist, beispielsweise bei einer Nachrichtenanzahl von zwei bei einer geraden Merkmalsanzahl, würde eine Statusnachricht stets nur die Hälfte der Messmerkmale erzeugt. Dadurch, dass die nächst höhere Primzahl als Nachrichtenanzahl gewählt wird (und insbesondere nicht eine beliebige, noch höhere Primzahl) wird vorteilhaft erreicht, dass bereits nach einer möglichst geringen Anzahl von Umdrehungen eine Statusnachricht für jedes Messmerkmal generiert wurde. Gleichwohl sind in anderen Weiterbildungen auch andere Zahlen, insbesondere Primzahlen, als Nachrichtenanzahl möglich.

Im Rahmen einer bevorzugten Weiterbildung ist
- eine erste Nachrichtensequenzart und eine zweite Nachrichtensequenzart vorgesehen, die abwechselnd aufeinanderfolgen, wobei die erste Nachrichtensequenzart eine erste Statusnachricht, insbesondere eine Peak-to-Peak-Nachricht, und die zweite Nachrichtensequenzart eine zweite Statusnachricht, insbesondere eine Temperaturnachricht, aufweist. In derartigen Weiterbildungen können vorteilhaft verschiedenartige Statusnachrichten erfasst und einem Messmerkmal zugeordnet werden, insbesondere um die Erkennung von einem Fehlerzustand und/oder einem Betriebszustand zu ermöglichen. Andere Weiterbildungen von Datenprotokollen können vorteilhaft noch weitere Nachrichtensequenzarten aufweisen, beispielsweise drei oder vier, die sich in analoger Weise nacheinander abwechseln, insbesondere um vorteilhaft noch weitere Kategorien von Statusnachrichten zu erfassen.

Im Rahmen einer bevorzugten Weiterbildung ist vorgesehen, dass die Nachrichtenanzahl von Nachrichten pro Nachrichtensequenz sieben beträgt. Die Nachrichtenanzahl sieben hat sich als vorteilhafte Nachrichtenanzahl erwiesen, insbesondere für eine Reihe von Merkmalsanzahlen, wie beispielsweise 60, 80, 100 oder 120.

Im Rahmen einer bevorzugten Weiterbildung ist vorgesehen, dass die Nachrichtenanzahl von Nachrichten pro Nachrichtensequenz sieben beträgt und die Nachrichtensequenz eine erste Statusnachricht an der vierten Stelle der Nachrichtensequenz und eine zweite Statusnachricht an der siebten Stelle der Nachrichtensequenz umfasst, wobei bevorzugt die erste Statusnachricht eine Peak-to-Peak-Nachricht und die zweite Statusnachricht eine Temperaturnachricht ist.

Im Rahmen einer bevorzugten Weiterbildung ist vorgesehen, dass
- die Nachrichtensequenz mindestens eine Statusnachricht, insbesondere zwei Statusnachrichten aufweist.

Im Rahmen einer bevorzugten Weiterbildung ist vorgesehen, dass
- die Nachrichtensequenz eine Reihenfolge von sechs Kanalnachrichten, einer als Peak-to-Peak-Nachricht ausgebildeten Statusnachricht, sechs Kanalnachrichten, und einer als Temperaturnachricht ausgebildeten Statusnachricht aufweist.

Im Rahmen einer bevorzugten Weiterbildung der Drehmesseinrichtung ist vorgesehen, dass
- der rotative Maßkörper als Zahnrad ausgebildet ist, insbesondere ein Messmerkmal als eine Zahn-Tal-Paarung aus einem Zahnkopf und einem Zahntal ausgebildet ist. Vorzugsweise weist der rotative Maßkörper eine Merkmalsanzahl von 60 oder 80 oder 100 oder 120 Messmerkmalen auf. In anderen Weiterbildungen kann die Merkmalsanzahl abweichen.

Vorzugsweise weist die elektronische Signalverarbeitungsvorrichtung oder der Drehmesssensor eine Auswerteeinheit auf, die ausgebildet ist zum Bereitstellen des Datenprotokolls gemäß dem ersten Aspekt der Erfindung in Abhängigkeit einer Messspannung des Drehmesssensors.

Im Rahmen einer bevorzugten Weiterbildung des Drehmesssystems eine Zuordnungseinheit vorgesehen, die ausgebildet ist, eine Nachricht vorbestimmter Art einer Nachrichtensequenz einem Messmerkmal zuzuordnen in Form eines Wertetupels, insbesondere auf Basis der Nachrichtenanzahl. Zur Zuordnung zu einem Messmerkmal kann vorteilhaft jedem Messmerkmal ein Merkmalsindex zugeordnet sein, insbesondere in Form einer ganzzahligen Nummerierung. Vorteilhaft kann das Wertetupel weitere Komponenten umfassen, insbesondere einen Index zur Zuordnung des Wertetupels in einer Tabelle.

Im Rahmen einer bevorzugten Weiterbildung des Drehmesssystems ist ein Zuordnungsspeicher, insbesondere Zuordnungstabelle, vorgesehen, der ausgebildet ist, für ein oder mehrere Messmerkmale jeweils eine zugeordnete Nachricht vorbestimmter Art, insbesondere das Wertetupel, zu hinterlegen. Der Zuordnungsspeicher kann durch eine Datenbank, einen Flash-Speicher oder dergleichen geeigneten Speichermittel gebildet sein.

Im Rahmen einer bevorzugten Weiterbildung des Drehmesssystems ist eine Auswerteeinheit vorgesehen, ausgebildet zum Erkennen von einem Fehlerzustand und/oder einem Betriebszustand in Abhängigkeit des mindestens einen, der Nachricht vorbestimmter Art zugeordneten, Messmerkmals, insbesondere in Abhängigkeit des mindestens einen Wertetupels. Die Auswerteeinheit kann als Softwaremodul, insbesondere in der elektronischen Steuereinheit, oder als Hardwaremodul gebildet sein.

Ausführungsformen der Erfindung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: eine schematisch dargestellte bevorzugte Ausführungsform einer Drehmesseinrichtung gemäß dem zweiten Aspekt der Erfindung, mit einer Signalverarbeitungsvorrichtung gemäß dem ersten Aspekt der Erfindung, die ausgebildet ist zum Bereitstellen aufeinanderfolgender Nachrichtensequenzen gemäß einer Datenfolge
- Fig. 2A, Fig. 2B: jeweils ein Datenprotokoll für bevorzugte Ausführungsformen einer Signalverarbeitungsvorrichtung gemäß dem ersten Aspekt der Erfindung,
- Fig. 3: eine schematische Darstellung eines bevorzugten Zuordnungsspeichers mit einer Zuordnungstabelle zur Zuordnung einer Nachrichtenanzahl von Statusnachrichten zu jeweils einem Messmerkmal,
- Fig. 4: einen schematischen Aufbau einer Nachricht mit Nachrichtenbits,
- Fig. 5A: eine perspektivische Ansicht einer bevorzugten Ausführungsform einer Drehmesseinrichtung gemäß dem zweiten Aspekt der Erfindung,
- Fig. 5B: eine perspektivische Ansicht eines weiteren bevorzugten, als Kronenrad ausgebildeten rotativen Maßkörpers,
- Fig. 6: eine schematisch dargestellte bevorzugte Ausführungsform eines Fahrzeugs gemäß dem dritten Aspekt der Erfindung, aufweisend eine Drehmesseinrichtung gemäß dem zweiten Aspekt der Erfindung.

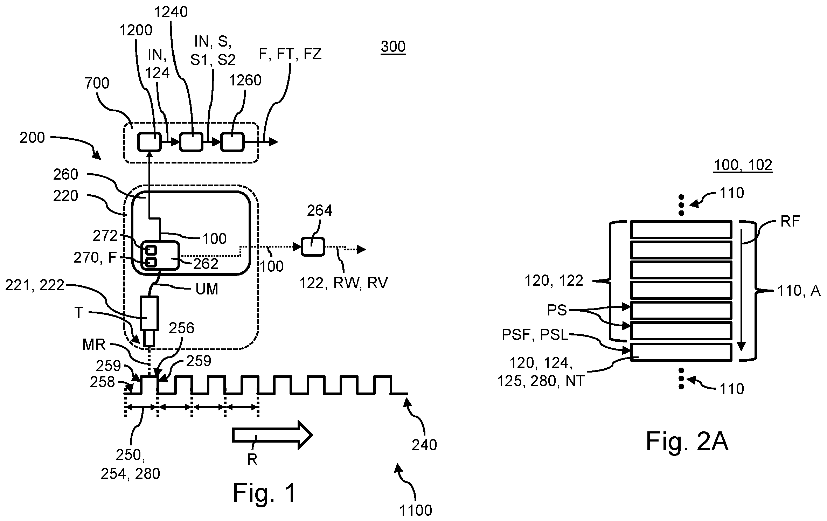

Fig. 1 zeigt eine schematisch dargestellte Ausführungsform eines Drehmesssystems 300 mit einer Drehmesseinrichtung 200. Die Drehmesseinrichtung 200 weist einen Drehmesssensor 220 und einen rotativen Maßkörper 240 auf. Der Drehmesssensor 220 weist vorliegend einen Messwertaufnehmer 221 auf, der als Hall-Sensor 222 ausgebildet ist. Der Hall-Sensor 222 ist in einer Messrichtung MR zum rotativem Maßkörper 240, beispielsweise ein Polrad, ausgerichtet. Der rotative Maßkörper 240 ist drehstarr mit einem rotierenden Teil 1100, beispielsweise einem Rad 540 eines Fahrzeugs 1000, verbunden, um dessen Drehbewegung R zu erfassen. Die an sich bekannte Funktionsweise eines Hall-Sensors 222 ist vereinfacht beschrieben derart, dass in Abhängigkeit des Vorhandenseins eines Messmerkmals 250 im - hier vereinfacht durch die Messrichtung MR beschriebenen - Messfeldes des Hall-Sensors 222 eine induzierte Messspannung UM von dem Hall-Sensor 222 bereitgestellt wird.

Beispielsweise wird bei dem Vorhandensein eines Zahnkopfs 256 an einem Polrad, als bevorzugte Ausführung des rotativen Maßkörpers, eine höhere Messspannung UM bereitgestellt als bei dem Vorhandensein eines Zahntals 258, wobei diese Zuordnung jedoch auch abweichen kann, beispielsweise in Abhängigkeit der Ausrichtung des Hallsensors 222. Es können auch andere Eigenschaften hauptsächlich des Sensors Berücksichtigung finden, beispielsweise vor allem eine Auswahl der Hallelemente des Hallsensors 222.

Vorliegend bilden ein Zahnkopf 256 und ein darauffolgendes Zahntal 258 zusammen eine Zahn-Tal-Paarung 254. Vorliegend bildet eine Zahn-Tal-Paarung 254 ein Messmerkmal 250.

Gleichwohl ist, wie oben erwähnt für eine andere Ausführungsform, eine andere Zuordnung möglich, beispielsweise indem eine jede Zahnflanke 259 ein Messmerkmal 250 bildet. In diesem Fall würden sich innerhalb einer Zahn-Tal-Paarung 254 zwei Messmerkmale 250 ergeben; nämlich ein erstes für eine in Drehrichtung ansteigende Zahnflanke und ein zweites für eine in Drehrichtung abfallende Zahnflanke.

Die Drehmesseinrichtung 200 weist vorliegend weiter eine elektronische Signalverarbeitungsvorrichtung 260 auf, die ausgebildet ist zum Bereitstellen eines Datenprotokolls 100. Die Signalverarbeitungsvorrichtung 260 ist vorliegend im Drehmesssensor 220 integriert und signalführend mit dem Messwertaufnehmer 221 verbunden. In anderen Ausführungsformen kann die Signalverarbeitungsvorrichtung 260, auch in anderen elektronischen Komponenten ausgebildet sein. Die Signalverarbeitungsvorrichtung 260 kann in anderen Ausführungsformen beispielsweise als Hardware- bzw. Software-Modul in einer übergeordneten, insbesondere zentralen, elektronischen Steuereinrichtung 700, beispielsweise einer Fahrzeugsteuereinheit 702, ausgebildet sein. Die Signalverarbeitungsvorrichtung 260 weist vorliegend eine Auswerteeinheit 262 auf.

Das Drehmesssystem 300 weist vorliegend eine Zuordnungseinheit 1200, einen Zuordnungsspeicher 1240 und eine Diagnoseeinheit 1260 auf, die in einer elektronischen Steuereinrichtung 700 angeordnet sind. Die Signalverarbeitungsvorrichtung 260 ist ausgebildet, in Abhängigkeit der Messspannung UM des Hallsensors 222 Informationen gemäß dem Datenprotokoll 100 bereitzustellen, und zwar mit einer Nachricht 120 pro Messmerkmal 250, das den Drehmesssensor 220 passiert hat. Die Signalverarbeitungsvorrichtung 260 oder der Drehmesssensor 220 können vorteilhaft zum Bereitstellen eines Zeitstempels für jede Nachricht 120ausgebildet sein.

Insbesondere wird eine Nachricht 120 unmittelbar nach dem Passieren des korrespondierenden Messmerkmals 250 erzeugt und bei Erreichen der Nachrichtenanzahl A der Nachrichtensequenz 110, d.h. wenn eine der Nachrichtenanzahl A entsprechende Menge an Messmerkmalen 250 den Drehmesssensor 220 passiert hat, wird die Nachrichtenanzahl A von Nachrichten 120 als Nachrichtensequenz 110 bereitgestellt.

Die Zuordnungseinheit 1200 ist ausgebildet, aus dem Datenprotokoll 100 diejenigen Nachrichten 120 zu erfassen, die Nachrichten vorbestimmter Art 123, insbesondere Statusnachrichten 124 sind, und dem jeweiligen Messmerkmal 250 zuzuordnen. Hierfür kann vorteilhaft für jedes Messmerkmal 250 des rotativen Maßkörpers 240 ein Merkmalsindex MIN bzw. eine Nummer vorgesehen werden. Vorteilhaft kann das Wertetupel weitere Komponenten umfassen, insbesondere einen Index IN zur Zuordnung des Wertetupels. Das Wertetupel aus Merkmalsindex MIN, Index IN und Statusnachricht 124 kann vorteilhaft in dem Zuordnungsspeicher 1240, insbesondere mit einer Zuordnungstabelle 1242, hinterlegt werden. Zur Verdeutlichung: bei einer beispielhaften Merkmalsanzahl MA von 80 würde kurz vor Vollendung einer dritten Umdrehungen U des rotativen Maßkörpers 240 der Index IN bis 240 (U x MA = 3 x 80) hochgezählt sein. Der Merkmalsindex MIN, der beim Hochzählen nach Erreichen der Merkmalsanzahl MA stets wieder von vorne beginnt, läge entsprechend bei 80 (und würde beim nächsten Messmerkmal zu Beginn der vierten Umdrehung wieder bei 1 starten).

Unabhängig von ihrem Auftretenszeitpunkt übermitteln Nachrichten 120 in ihren sogenannten "words" eine weitere Information, deren Bedeutung aber von der Nachrichtenart abhängt und von der Art des Datenprotokolls. Im Rahmen eines bevorzugten Ausführungsbeispiels kann dies das weiter unten genannte AK-Datenprotokoll oder ein Datenprotokoll im Allgemeinen sein.

So kann in den "words" sogenannter Kanalnachrichten -abhängig von der Art des Datenprotokolls-- eine "channel select" Information übertragen werden. Dies ist eine Eigenschaft hauptsächlich des Sensors und gibt vor allem eine Auswahl der Hallelemente des Hallsensors 222 an, beispielswiese welche zwei von vorliegend insgesamt drei im Sensor enthaltenen Hallelemente verwendet wurden. Diese insofern allgemein mögliche und in der speziellen Ausführung vorzunehmende Auswahl der Hallelemente nimmt der Hallsensor 222 bzw. Drehmesssensor 220 selbstständig vor, und zwar so, dass die erzeugten Spannungen der ausgewählten Hallelemente möglichst ungleichzeitig erfolgen.

Damit ist sichergestellt, dass der Sensor aus der relativen zeitlichen Lage der beiden Hallelementspannungen möglichst gut die Drehrichtung erkennen kann. Dieser vorgenannte "channel select"-Mechanismus ist somit beispielshaft für eine konkrete Ausführung des Konzepts der Erfindung; das Konzept der Erfindung ist insofern allgemeiner zu verstehen und die nachfolgenden Ausführungsformen in Bezug auf eine bestimmte Art eines Hallsensors 222 bzw. Drehmesssensor 220 oder eine bestimmte Art eines Datenprotokolls sind keinesfalls einschränkend für das allgemein zu verstehende Konzept der Erfindung.

Durch das Datenprotokoll bzw. mit Maßgabe einer Datenfolge wird definiert, welche Nachrichtenart NT jeweils gesendet wird bzw. welches die Nachricht vorbestimmter Art gemäß dem allgemeinen Konzept der Erfindung ist. Vorliegend in dem zur erläuternden Ausführungsbeispiel handelt es sich bei der Nachricht vorbestimmter Art 123 um eine Statusnachricht 124 gemäß einem Datenprotokoll 100. Die Nachrichtenart NT der Nachricht 120 einer Nachrichtensequenz 110 kann von der Signalverarbeitungsvorrichtung 260 oder dergleichen Auswerteeinheit allein anhand der - durch das Datenprotokoll 100 definierten - Reihenfolge klassifiziert werden.

Die Nachrichtenart NT kann aber auch zusätzlich oder alternativ in der Nachricht 120 codiert sein, beispielsweise in bestimmten Bits des "words" der Nachrichten. Die Signalverarbeitungsvorrichtung 260 oder dergleichen Auswerteeinheit kann dann unabhängig von der Reihenfolge die Nachrichtenart identifizieren.

Mittels der Diagnoseeinheit 1260 können so auf Basis der in dem Zuordnungsspeicher 1240 hinterlegten Nachrichten vorbestimmter Art 123, insbesondere Statusnachrichten 124 Diagnosefunktionen realisiert werden.

Beispielsweise kann aufgrund einer Menge von Peak-to-Peak-Nachrichten 125, die jeweils einem Messmerkmal 250 zuordenbar sind, auf einen Taumelfehler FT des rotativen Maßkörpers 240 und/oder des rotierenden Teils 1100 geschlossen werden. Ein Taumelfehler FT liegt insbesondere vor, wenn der rotative Maßkörper 240 und/oder das rotierende Teil 1100 nicht mehr um eine Rotationsachse AR drehen, sondern eine abweichende Rotationsachse aufweisen. Hierzu können statistische Verfahren wie z.B. Regression, Mittelwertbestimmung und dergleichen angewendet werden. Ebenfalls können, beispielsweise mittels festgelegten oder dynamisch anpassbaren Grenzwerten, Ausreißer zur Identifizierung von Fehlern F der Messmerkmale 250, beispielsweise mechanischen Fehlern in der Zahn-Tal-Paarung 254, einem Zahnfehler FZ, durch die Diagnoseeinheit 1260 bestimmt werden.

Allgemein ist zu verstehen, dass in einer "peak-to-peak" Nachricht ein Maß für die absolute Größe der Spannungsänderungen bei einem Vorbeibewegen des aktuellen Messmerkmals am Sensor übertragen wird. Fehlende oder beschädigte Zähne, oder mit Metallabrieb gefüllte Zahnzwischenräume bewirken bei Vorbeibewegung eine schwächere Magnetfeldänderung und damit geringere Spannungsänderungen (kleinerer peak-to-peak Wert).

Die Drehmesseinrichtung 200 weist weiter einen rotativen Maßkörper 240 auf, der hier lediglich ausschnittsweise und in einem abgerollten Zustand dargestellt ist, in dem der - eigentlich kreisbogenförmige Verlauf - von sich abwechselnden Zahnköpfen 256 und Zahntälern 258 hier gerade verlaufend gezeigt ist. Der rotative Maßkörper 240 ist als Zahnrad 242 ausgebildet mit einer Nachrichtenanzahl A an Messmerkmalen 250, wobei die Messmerkmale 250 vorliegend jeweils als eine Zahn-Tal-Paarung 254 ausgebildet sind. Jeweils ein Zahnkopf 256 und ein benachbartes Zahntal 258 bilden zusammen eine Zahn-Tal-Paarung 254. Ein Messmerkmal 250 kann eine oder mehrere Merkmalseigenschaften 280 aufweisen, die sich in Abmessungen, Temperaturen oder dergleichen Zustandsparameter äußern können. Eine Merkmalseigenschaft 280 ist insbesondere messbar und kann vorteilhaft Rückschluss über den Zustand des Messmerkmals 250 erlauben.

Beispielhaft ist in Fig. 1 noch eine weitere Verarbeitungseinheit 264 dargestellt, welche ebenfalls auf Basis des Datenprotokolls 100 die Daten der Drehmesseinrichtung 200 genutzt bzw. weiterverarbeitet. Insbesondere können auf Basis der Kanalnachrichten 122, vorteilhaft auf Basis der Zeitstempel der Kanalnachrichten 122, positions- und/oder bewegungsbezogene Kenngrößen bestimmt werden wie z.B. eine Winkellage RW, das heißt Drehposition, oder eine Drehgeschwindigkeit RV des rotierenden Teils 1100.

Fig. 2A zeigt schematisch eine bevorzugte Ausführungsform einer Signalverarbeitungsvorrichtung mit Datenprotokoll 100 als zyklische Abfolge von Nachrichtensequenzen 110, von denen eine Nachrichtensequenz 110 detailliert dargestellt ist. Die Nachrichtensequenz 110 des Datenprotokolls 100 weist eine Nachrichtenanzahl A von sieben Nachrichten 120 in einer Reihenfolge RF auf. Jede Nachricht befindet sich an einer Sequenzposition PS, von der hier zwei bespielhaft bezeichnet sind.

Die Nachrichtensequenz 110 weist eine Nachricht vorbestimmter Art 123 in Form einer Statusnachricht 124 auf. Die Statusnachricht 124 befindet sich an einer festen Sequenzposition PSF für jede Nachrichtensequenz 110. Vorliegend ist die letzte Nachricht 120 einer Nachrichtensequenz 110 als Statusnachricht 124 ausgebildet, d.h. die feste Sequenzposition PSF befindet sich an einer letzten Sequenzposition PSL der Nachrichtensequenz 110. Die Statusnachricht 124 beschreibt eine Merkmalseigenschaft 280 des ihr zugeordneten Messmerkmals 250.

Vorliegend ist die Nachricht vorbestimmter Art 123 als sogenannte Peak-to-Peak-Nachricht 125 ausgebildet, die in Form eines Zahlenwerts eine Spannungsdifferenz der in den Hall-Sensor induzierten Spannung zwischen der höchsten und der niedrigsten Stelle einer Zahn-Tal-Paarung 254 beschreibt. Die Peak-to-Peak-Nachricht 125 charakterisiert somit einen tatsächlichen Höhenunterschied zwischen einem Zahnkopf 256 und einem Zahntal 258 in einer Messrichtung MR. Mittels der Peak-to-Peak-Nachricht 125 können somit Fehler im rotativen Maßkörper 240, beispielsweise ein beschädigter, insbesondere ausgebrochener, Zahnkopf 256 oder ein zugesetztes Zahntal 258, identifiziert werden. Auch ein Taumeln oder dergleichen kinematischer Fehler des rotativen Maßkörpers 240 kann verbessert erkannt werden, wenn eine Statusnachricht 124, insbesondere eine Peak-to-Peak-Nachricht 125, für jedes Messmerkmal 250 vorliegt, insbesondere, weil derartige Tendenzen selbst bei einer relativ geringen Messauflösung früher erkannt werden. Eine Nachricht 120, insbesondere eine Kanalnachricht 122 oder eine Statusnachricht 124, ist vorzugsweise als 3-Bit-Wert ausgebildet, und kann somit einen Wert zwischen 0 und 7 annehmen. In anderen Ausführungsformen kann die Statusnachricht 124 anders ausgebildet sein, beispielsweise als Temperaturnachricht 126, die eine Temperatur T am Drehmesssensor 220 beschreibt. In anderen Ausführungsformen kann die Nachricht 120 gemäß dem Datenprotokoll 100 anders ausgebildet sein, beispielsweise als 9-Bit-Wert.

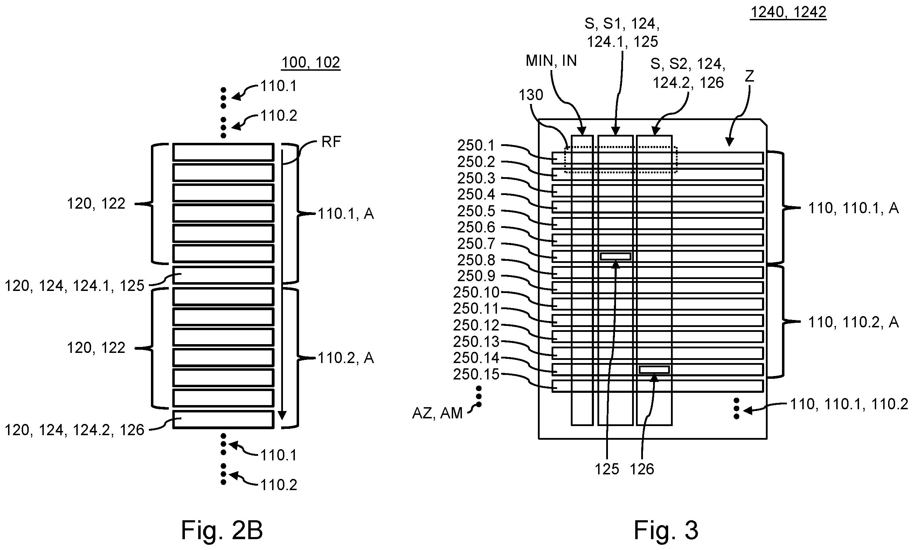

In Fig. 2B ist eine weitere bevorzugte Ausführungsform eines Datenprotokolls 100 dargestellt, bei der eine erste Nachrichtensequenzart 110.1 und eine zweite Nachrichtensequenzart 110.2 abwechselnd aufeinanderfolgen. Die erste Nachrichtensequenzart 110.1 und die zweite Nachrichtensequenzart 110.2 unterscheiden sich dadurch, dass ihre Nachrichten vorbestimmter Art 123 Statusnachrichten 124 unterschiedlicher Art sind. Das bedeutet, dass die Nachricht vorbestimmter Art 123 in der ersten Nachrichtensequenzart 110.1 von einer anderen Nachrichtenart NT ist als die Nachricht vorbestimmter Art 123 in der zweiten Nachrichtensequenzart 110.2. Vorliegend ist eine erste Statusnachricht 124.1 der ersten Nachrichtensequenzart 110.1 als Peak-to-Peak-Nachricht 125 ausgebildet und eine zweite Statusnachricht 124.2 der zweiten Nachrichtensequenzart 110.2 als Temperaturnachricht 126. Die erste Statusnachricht 124.1 und die zweite Statusnachricht 124.2 beschreiben somit jeweils eine unterschiedliche Merkmalseigenschaft 280 eines Messmerkmals 250. In einer derartigen Ausführungsform können aufgrund der verschiedenartigen Statusnachrichten vorteilhaft verschiedenartige Diagnoseinformationen bestimmt werden, und zwar insbesondere - nach einer ausreichenden Nachrichtenanzahl an Umdrehungen U - vorteilhaft für jedes Messmerkmal 250 des rotativen Maßkörpers 240. Somit kann beispielsweise wie in dem hier gezeigten Beispiel für jedes Messmerkmal 250 sowohl eine Peak-to-Peak-Nachricht 125, als auch - in einem entsprechend späteren Durchgang bzw. Nachrichtensequenz 110 - eine Temperaturnachricht 126 bereitgestellt werden.

In einer derartigen Ausführungsform wird also mit jeder Nachrichtensequenz 110 abwechselnd eine Peak-to-Peak-Nachricht 125 als Statusnachricht 124 und eine Temperaturnachricht 126 als Statusnachricht 124 bereitgestellt.

Gleichwohl sind im Rahmen der Erfindung andere Ausführungsformen von Datenprotokollen mit einer größeren Nachrichtenanzahl an aufeinanderfolgenden Nachrichtensequenzarten möglich mit jeweils verschiedenartigen Statusnachrichten.

Im vorliegend des Weiteren beispielhaft beschriebenen Datenprotokoll in Form eines AK-Protokoll werden aufeinanderfolgend 9 Kanalnachrichten 122 und danach eine Statusnachricht 124 erzeugt. Ein konkretes Beispiel gemäß eines nach AK-Protokoll, funktionierenden Sensor, beispielsweise einem ATS-Sensor der Firma Allegro, wie in dem Modell ATS604:
Es kann eine Nachrichtensequenz beispielsweise wie folgt lauten:
- Neun Mal "Channel-Selected" (insbesondere zur Montageposition des Sensors),
- ein Mal "Peak-Peak Information" (Spannungsdifferenz des Hall-Sensors zwischen *pole* und *gap,* insbesondere Zahnkopf und Zahntal),
- neun Mal "Channel-Selected" (insbesondere zur Montageposition des Sensors),
- ein Mal "Temperature Information" (Sensortemperatur).

Nachdem die Nachrichtensequenz durchgeführt wurde, wird sie wiederholt. Gängige rotative Maßkörper, insbesondere Polräder, können beispielsweise eine Merkmalsanzahl, insbesondere Zahnzahl, von 60, 80, 100 oder 120 aufweisen. Dies würde in einer "Peak-to-Peak Information" bzw. "Peak-Peak Information" für nur jedes zehnte Merkmal, insbesondere jeden zwanzigsten Pol oder Zahnkopf, resultieren.

In einer bevorzugten Ausführungsform darf der Wiederholungszyklus der "Peak-to-Peak Information" kein ganzzahliger Teiler der Merkmalsanzahl, beispielsweise in dieser Ausführungsform der Zahnzahl, sein, um zu erreichen, dass über eine Anzahl von Umdrehungen eine "Peak-to-Peak Information" für jedes Merkmal, beispielsweise in dieser Ausführungsform jeden Pol oder jedem Zahnkopf, bereitgestellt wird.

Eine entsprechende Nachrichtensequenz lautet in einer solchen bevorzugten Ausführungsform beispielsweise wie folgt:
- Sechs Mal "Channel-Selected" (insbesondere zur Montageposition des Sensors),
- ein Mal "Peak-Peak Information" (Spannungsdifferenz des Hall-Sensors zwischen *pole* und *gap,* insbesondere Zahnkopf und Zahntal),
- sechs Mal "Channel-Selected" (insbesondere zur Montageposition des Sensors),
- ein Mal "Temperature Information" (Sensortemperatur).

Auf diese Weise wird die "Peak-Peak Information" für jedes vierzehnte Merkmal, insbesondere jeden vierzehnten Zahn oder Pol, bereitgestellt und vierzehn ist kein ganzzahliger Teiler von 60, 80, 100 oder 120. Somit wird mit jeder Umdrehung des rotativen Maßkörpers, hier des Zahnrads bzw. Polrads, eine "Peak-Peak Information" für andere Merkmale, insbesondere Pole oder Zahnkopf oder Zahn-Tal-Paarungen, bereitgestellt.

In einer besonders bevorzugten Ausführungsform ist die Nachrichtensequenz wie folgt gebildet:
- Drei Mal "Channel-Selected" (insbesondere zur Montageposition des Sensors),
- ein Mal "Peak-Peak Information" (Spannungsdifferenz des Hall-Sensors zwischen *pole* und *gap,* insbesondere Zahnkopf und Zahntal),
- zwei Mal "Channel-Selected" (insbesondere zur Montageposition des Sensors),
- ein Mal "Temperature Information" (Sensortemperatur).

In einer derartigen Ausführungsform beträgt die Nachrichtenanzahl A sieben, und somit wird sowohl die "Peak-Peak Information" als auch die Temperaturinformation für jedes siebte Messmerkmal bereitgestellt. Es werden auf diese Weise vorteilhaft eine relativ geringe Anzahl an Umdrehungen U benötigt, um sämtliche Messmerkmale zu erfassen.

Abhängig von der Merkmalsanzahl, hier der Zahnanzahl, werden nach einer gewissen Nachrichtenanzahl an Umdrehungen alle Pole berücksichtigt bzw. erfasst.

Fig. 3 zeigt schematisch einen Zuordnungsspeicher 1240 mit einer Zuordnungstabelle 1242. Die Zuordnungstabelle 1242 beschreibt dabei insbesondere die Struktur einer Datenbank oder eines Speichers, nach der die von der Drehmesseinrichtung 200 gemäß dem Datenprotokoll 100 bereitgestellte Nachrichten 120 gespeichert werden und abrufbar sind. Ein Zuordnungsspeicher 1240 ist insbesondere zum Speichern von Nachrichten vorbestimmter Art 123 ausgebildet, und ermöglicht auf diese Weise ein Messzyklus-übergreifendes Vorhalten der Nachrichten vorbestimmter Art 123, insbesondere zu Analyse- und Diagnosezwecken. Ein Messzyklus im Sinne dieser Beschreibung beinhaltet das Bereitstellen einer einzelnen Nachrichtensequenz 110.

Vorliegend weist die Zuordnungstabelle 1242 eine Zeilenanzahl AZ von Zeilen Z auf, die der Merkmalsanzahl AM entspricht. Somit ist eine Zuordnung von Werten, insbesondere von Statusnachrichten 124, zu einem individuellen Messmerkmal 250 möglich. Insbesondere ist jede Zeile Z mit einem Merkmalsindex MIN nummeriert zur Zuordnung zu einem Messmerkmal 250. Vorliegend sind beispielhaft die ersten fünfzehn Zeilen Z für die ersten fünfzehn Messmerkmale 250.1 bis 250.15 dargestellt. Beispielhaft ist hier der Zuordnungsspeicher 1240 und die Zuordnungstabelle 1242 für die in Fig. 2B gezeigte Ausführungsform eines Datenprotokolls 100 dargestellt mit einer ersten Nachrichtensequenzart 110.1 und einer darauffolgenden zweiten Nachrichtensequenzart 110.2. Die ersten sieben Zeilen sind dabei einer ersten Nachrichtensequenz 110 der ersten Nachrichtensequenzart 110.1 zuzuordnen, die folgenden sieben Zeilen einer zweiten Nachrichtensequenz 110 der zweiten Nachrichtensequenzart 110.2. Die fünfzehnte, dem Messmerkmal 250.15 zugeordnete Zeile bildet somit den Anfang, das heißt die erste Nachricht, einer dritten Nachrichtensequenz 110 der ersten Nachrichtensequenzart 110.1. Für jede Kategorie von Statusnachrichten 124 kann eine Spalte S in der Zuordnungstabelle 1242 vorgesehen werden, vorliegend ist dies eine erste Spalte S1 für die als Peak-to-Peak-Nachricht 125 ausgebildete erste Statusnachricht 124.1, und eine zweite Spalte S2 für die als Temperaturnachricht 126 ausgebildete zweite Statusnachricht 124.2. Einem Betrieb der Drehmesseinrichtung 200 werden somit nach und nach, insbesondere von einer Zuordnungseinheit 1200, die Statusnachrichten 124 gemäß ihrer Art in der entsprechenden Spalte S1, S2 hinterlegt. Insbesondere werden bei dem Hinterlegen die Kanalnachrichten 122 nicht betrachtet. Mit jedem Messzyklus, das heißt mit jeder Nachrichtensequenz 110 wird somit ein weiterer Wert einer Statusnachricht 124 in die Zuordnungstabelle 1242 aufgenommen. Alternativ oder zusätzlich kann die Zeilenanzahl AZ eine andere Zahl sein, die unterschiedlich ist von der Merkmalsanzahl AM. Alternativ oder zusätzlich zum Merkmalsindex MIN kann jede Zeile Z einen Index IN aufweisen zur Zuordnung jeder Zeile Z in der Zuordnungstabelle 1242. Vorteilhaft ist in jeder Zeile Z ein Wertetupel 130 hinterlegt.

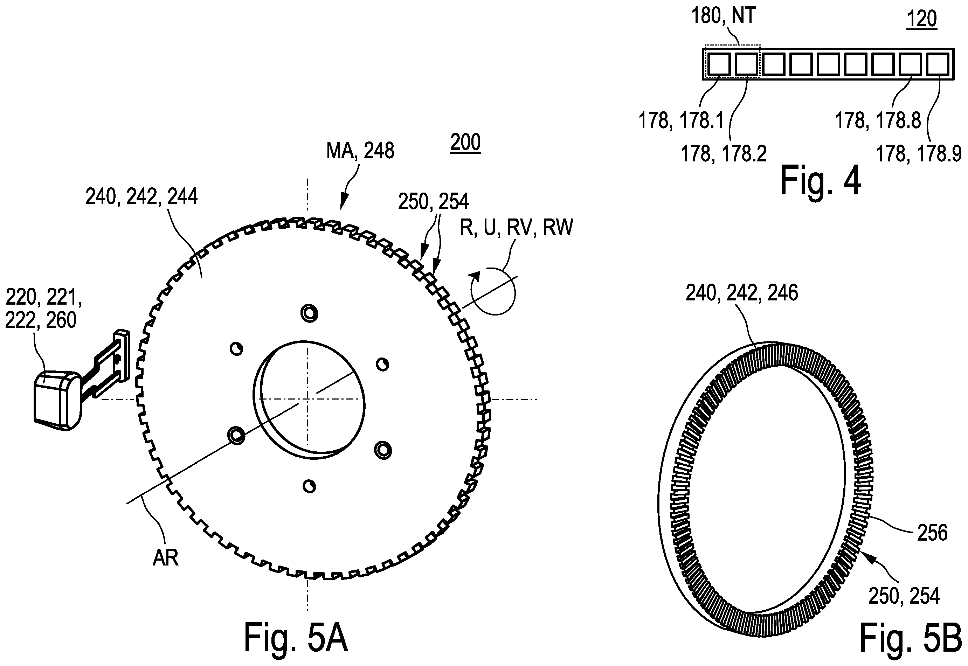

Fig. 4 zeigt schematisch einen vorteilhaften Aufbau einer Nachricht 120. Eine Nachricht 120 ist vorteilhaft durch eine Anzahl von Nachrichtenbits 178 aufgebaut. Bevorzugt weist jede Nachricht 120 dieselbe Struktur, insbesondere dieselbe Anzahl von Nachrichtenbits 178 auf. Vorliegend weist die Nachricht 120 eine Anzahl von neun Nachrichtenbits 178 auf, die entsprechend von einem ersten Nachrichtenbit 178.1 bis zu einem neunten Nachrichtenbit 178.9 nummeriert sind. Es handelt sich somit um eine 9-Bit-Nachricht. Bei der hier gezeigten Nachricht 120 bilden vorteilhaft das erste Nachrichtenbit 178.1 und das zweite Nachrichtenbit 178.2 eine Eigenschaftskennung 180, mittels der vorteilhaft die Nachrichtenart NT einer Nachricht 120 gekennzeichnet werden kann. Auf diese Weise kann mittels der Eigenschaftskennung 180 vorteilhaft angegeben werden, ob es sich bei der Nachricht 120 um eine Kanalnachricht 122, oder eine Nachricht vorbestimmter Art 123, wie z.B. eine Peak-to-Peak-Nachricht 125 oder Temperaturnachricht 126, handelt. In anderen Ausführungsformen von Signalverarbeitungsvorrichtungen 260 kann der Aufbau einer Nachricht 120 anders ausgebildet sein, insbesondere mehr oder weniger Nachrichtenbits 178 aufweisen, oder eine Eigenschaftskennung 180 an einer anderen Stelle der Nachricht 120 aufweisen.

Fig. 5A zeigt in einer perspektivischen Ansicht eine Drehmesseinrichtung 200 gemäß dem zweiten Aspekt der Erfindung. Der rotative Maßkörper 240 ist als Zahnrad 242 in Form eines Stirnrads 244 ausgebildet, das eine Merkmalsanzahl AM von Messmerkmalen 250 aufweist, die als Zahn-Tal-Paarung 254 ausgebildet sind und äquidistant entlang einer Kreisbahn 248 auf dem Zahnrad 242 angeordnet sind. Der rotative Maßkörper 240 ist insbesondere drehstarr mit einem hier nicht dargestellten rotierenden Teil 1100 verbunden, um eine Drehbewegung R des rotativen Maßkörpers 240 - und somit des rotierenden Teils 1100 - messtechnisch zu erfassen. Je größer die Merkmalsanzahl A ist, desto kleiner sind die messtechnisch erfassbaren Abschnitte des rotativen Maßkörpers 240. Eine Umdrehung U entspricht dabei einer Bewegung des rotativen Maßkörpers 240 um 360° um die Rotationsachse AR. Bei einer Merkmalsanzahl MA von 60 erstreckt sich somit ein Messmerkmal 250 über ein Kreissegment von 6°. Je größer die Merkmalsanzahl MA ist, desto genauer kann die Drehbewegung R, insbesondere eine Drehgeschwindigkeit RV oder Winkellage RW, erfasst werden. Ein Zahnrad 242 im Sinne der Erfindung umfasst jegliche Körper mit insbesondere rotationssymmetrischem Grundkörper und einer Anzahl von geometrischen Merkmalen, welche den Abstand zu einem Drehmesssensor 220 in Bezug auf die Messrichtung MR bei einer Drehbewegung R variieren. Hierbei reicht es zum Zwecke der Messung insbesondere aus, wenn ein Zahnkopf rechteckig ausgebildet ist, das heißt wie hier in Fig. 5A gezeigt in tangentialer Richtung senkrecht ansteigend und abfallend ist. Der Drehmesssensor 220 umfasst einen Messwertaufnehmer 221 in Form eines Hall-Sensors 222. Der Drehmesssensor 220 umfasst in der hier gezeigten bevorzugten Ausführungsform vorteilhaft die Signalverarbeitungsvorrichtung 260.

Auch sind andere Formen von Zahnrädern 242 möglich, beispielsweise ein Kronenrad 246 mit in axialer Richtung ausgebildeten Zahnköpfen 256, wie hier beispielhaft in Fig. 5B gezeigt.

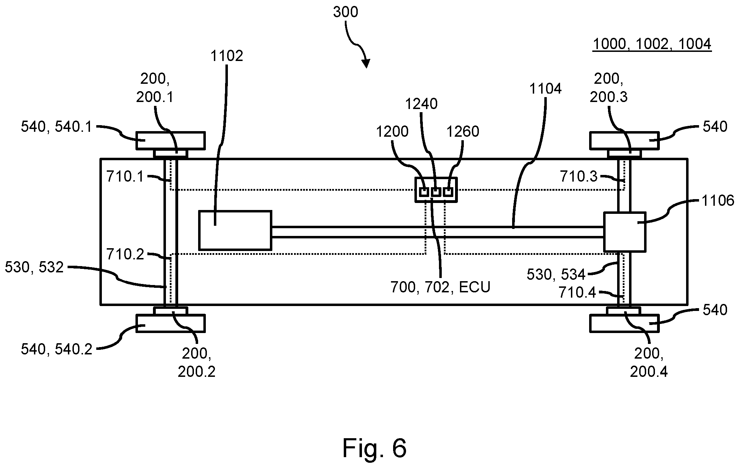

Fig. 6 zeigt stark schematisch ein Fahrzeug 1000 mit einem Drehmesssystem 300 mit einer Anzahl von vier Drehmesseinrichtungen 200 gemäß dem zweiten Aspekt der Erfindung. Das Fahrzeug 1000 kann, wie hier gezeigt, als PKW 1002 ausgebildet sein. In anderen Ausführungsformen kann das Fahrzeug 1000 anders ausgebildet sein, beispielsweise als Nutzfahrzeug 1004. Das Fahrzeug weist zwei Achsen 530, nämlich einem Vorderachse 532 und einer Hinterachse 534 auf. Die Hinterachse 534 wird von einem Antrieb 1102 über eine Antriebswelle 1104 und ein Differential 1106 angetrieben. An jeder Achse 530 sind zwei Räder 540 befestigt. An der Vorderachse 532 sind ein erstes Rad 540.1 mit einer ersten Drehmesseinrichtung 200.1 und ein zweites Rad 540.2 mit einer zweiten Drehmesseinrichtung 200.2, an der Hinterachse 534 ein drittes Rad 540.3 mit einer dritten Drehmesseinrichtung 200.3 und ein viertes Rad 540.4 mit einer vierten Drehmesseinrichtung 200.4 angeordnet. Das jeweilige Rad 540 stellt somit das rotierende Teil 1100 für die zugeordnete Drehmesseinrichtung 200 dar. Die erste Drehmesseinrichtung 200.1 ist mittels einer ersten Drehmess-Signalleitung 710.1 mit einer elektronischen Steuereinrichtung 700 in Form einer Fahrzeugsteuereinheit 702 signalführend verbunden. Die elektronische Steuereinrichtung 700 weist eine Zuordnungseinheit 1200, einen Zuordnungsspeicher 1240 und eine Diagnoseeinheit 1260 auf. In analoger Weise sind die übrigen Drehmesseinrichtungen 200.2, 200.3, 200.4 jeweils über eine Drehmess-Signalleitung 710.2, 710.3, 710.4 mit der elektronischen Steuereinrichtung 700signalführend verbunden. In Ausführungsformen kann die elektronische Signalverarbeitungsvorrichtung 260 oder die Zuordnungseinheit 1200, der Zuordnungsspeicher 1240 oder die Diagnoseeinheit 1260, als Hardware- oder Software-Modul in einer anderen elektronischen Steuereinheit angeordnet sein.

### Bezugszeichenliste (Teil der Beschreibung)

- 100: Datenprotokoll
- 110: Nachrichtensequenz
- 110.1, 110.2: erste, zweite Nachrichtensequenzart
- 120: Nachricht
- 122: Kanalnachrichten
- 124: Statusnachrichten
- 124.1, 124.2: erste, zweite Statusnachricht
- 125: Peak-to-Peak-Nachricht
- 126: Temperaturnachricht
- 130: Wertetupel
- 178: Nachrichtenbit
- 178.1 - 178.9: erstes bis neuntes Nachrichtenbit
- 180: Eigenschaftskennung
- 200: Drehmesseinrichtung
- 200.1-4: erste bis vierte Drehmesseinrichtung
- 220: Drehmesssensor
- 221: Messwertaufnehmer
- 222: Hall-Sensor
- 240: rotativer Maßkörper
- 242: Zahnrad
- 244: Stirnrad
- 246: Kronenrad
- 248: Kreisbahn
- 250: Messmerkmal
- 254: Zahn-Tal-Paarung
- 256: Zahnkopf
- 258: Zahntal
- 259: Zahnflanke
- 260: Signalverarbeitungsvorrichtung
- 262: Auswerteeinheit
- 264: weitere Verarbeitungseinheit
- 280: Merkmalseigenschaft
- 530: Achse
- 532: Vorderachse
- 534: Hinterachse
- 540: Rad
- 540.1-4: erstes bis viertes Rad
- 700: elektronische Steuereinrichtung
- 702: Fahrzeugsteuereinheit
- 710: Drehmess-Signalleitung
- 710.1-4: erste bis vierte Drehmess-Signalleitung
- 1000: Fahrzeug
- 1002: PKW
- 1004: Nutzfahrzeug
- 1100: rotierendes Teil
- 1102: Antrieb
- 1104: Antriebswelle
- 1106: Differential
- 1200: Zuordnungseinheit
- 1240: Zuordnungsspeicher
- 1242: Zuordnungstabelle
- 1260: Diagnoseeinheit

- A: Nachrichtenanzahl
- AM: Merkmalsanzahl
- AR: Rotationsachse
- AZ: Zeilenanzahl
- F: Fehlern
- FT: Taumelfehler
- FZ: Zahnfehler
- IN: Index
- MA: Merkmalsanzahl
- MR: Messrichtung
- NT: Nachrichtenart
- PS: Sequenzposition
- PSF: feste Sequenzposition
- PSL: letzte Sequenzposition
- R: Drehbewegung
- RF: Reihenfolge
- RV: Drehgeschwindigkeit
- RW: Winkellage
- S: Spalte
- U: Umdrehungen
- UM: Messspannung
- Z: Zeile

## Patentansprüche

1. Signalverarbeitungsvorrichtung (260), bevorzugt für ein Fahrzeug (1000), zur Signalverarbeitung für eine Drehmesseinrichtung (200) mit einem Drehmesssensor (220) und einem rotativen Maßkörper (240), wobei der rotative Maßkörper (240) eine Merkmalsanzahl (AM) von Messmerkmalen (250) aufweist, wobei
- zur Signalverarbeitung die Signalverarbeitungsvorrichtung (260) ausgebildet ist, zeitlich aufeinanderfolgende Nachrichtensequenzen (110) zur Verfügung zu stellen, und
- eine Nachrichtensequenz (110) eine Nachrichtenanzahl (A) von aufeinanderfolgenden Nachrichten (120) aufweist, derart, dass
- zeitlich aufeinanderfolgende Nachrichten (120) örtlich benachbarten Messmerkmalen (250) zeitlich nacheinander zugeordnet sind, wobei die Messmerkmale (250) mit dem Drehmesssensor (220) wechselwirken, und jede Nachricht (120) in einer aus einer vorbestimmten Anzahl von Nachrichtenarten ausgewählten Nachrichtenart (NT, C, T, P) zur Verfügung gestellt wird, und
- eine an einer festen Sequenzposition (PSF) der Nachrichtensequenz (110) angeordnete Nachricht (120) eine Nachricht vorbestimmter Art (123) ist, welche eine Merkmalseigenschaft (280) des zugeordneten Messmerkmals (250) beschreibt,
**dadurch gekennzeichnet, dass**
- die Signalverarbeitungsvorrichtung (260) ausgebildet ist, die Nachrichtensequenzen (110) so zu erzeugen, dass die Nachrichtenanzahl (A) und die Merkmalsanzahl (AM) zueinander teilerfremd sind.

2. Signalverarbeitungsvorrichtung (260) nach Anspruch 1, **dadurch gekennzeichnet, dass** ein Quotient aus Merkmalsanzahl (AM) und Nachrichtenanzahl (A) nicht ganzzahlig ist.

3. Signalverarbeitungsvorrichtung (260) nach Anspruch 1 oder 2, **dadurch gekennzeichnet, dass**
- die Nachrichtenanzahl (A) eine Primzahl ist, insbesondere eine kleinere oder kleinste in der Primfaktorzerlegung der Merkmalsanzahl (AM) nicht vorkommende Primzahl ist.

4. Signalverarbeitungsvorrichtung (260) nach einem der Ansprüche 1 bis 3, **dadurch gekennzeichnet, dass**
- jede Nachrichtensequenz (110) so erzeugt wird, dass die Nachrichtenanzahl (A) und die Merkmalsanzahl (AM) zueinander teilerfremd sind, und/oder
- die Nachrichtenanzahl (A) von aufeinanderfolgende Nachrichten (120) in einer durch ein zugeordnetes Datenprotokoll (100) vorbestimmten Reihenfolge (RF) vorgesehen sind und die aufeinanderfolgenden Nachrichtensequenzen (110) in einer durch das zugeordnete Datenprotokoll (100) vorbestimmten Reihenfolge vorgesehen sind.

5. Signalverarbeitungsvorrichtung (260) nach einem der Ansprüche 1 bis 4, **dadurch gekennzeichnet, dass**
- die Nachricht (120) vorbestimmter Art (123) eine Statusnachricht (124) gemäß einem Datenprotokoll (100) ist, insbesondere eine letzte Nachricht (120) der Nachrichtensequenz (110) die Statusnachricht (124) ist.

6. Signalverarbeitungsvorrichtung (260) nach einem der vorherigen Ansprüche, **dadurch gekennzeichnet, dass**
- eine erste Nachrichtensequenzart (110.1) und eine zweite Nachrichtensequenzart (110.2) abwechselnd aufeinanderfolgen, wobei die erste Nachrichtensequenzart (110.1) eine erste Statusnachricht (124.1), insbesondere eine Peak-to-Peak-Nachricht (125), und die zweite Nachrichtensequenzart (110.2) eine zweite Statusnachricht (124.2), insbesondere eine Temperaturnachricht (126), aufweist.

7. Signalverarbeitungsvorrichtung (260) nach einem der vorherigen Ansprüche, **dadurch gekennzeichnet, dass** ein Datenprotokoll (100) ein AK-Protokoll (102) ist, insbesondere die Nachrichtenanzahl (A) sieben beträgt.

8. Signalverarbeitungsvorrichtung (260) nach einem der vorherigen Ansprüche, **gekennzeichnet durch** eine elektrische Schnittstelle zur Verbindung mit einer separaten elektrischen Leitung zum Drehmesssensor (240).

9. Drehmesseinrichtung (200) für ein rotierendes Teil (1100), bevorzugt für ein Fahrzeug (1000), besonders bevorzugt für eine Welle oder ein Rad (540) eines Fahrzeugs (1000), aufweisend:
- einen Drehmesssensor (220),
- einen rotativen Maßkörper (240) mit einer Merkmalsanzahl (AM) von Messmerkmalen (250), insbesondere wobei die Messmerkmale (250) entlang einer Kreisbahn (248) und/oder äquidistant angeordnet sind,
- eine Signalverarbeitungsvorrichtung (260) gemäß einem der Ansprüche 1 bis 8, die signalführend mit dem Messwertaufnehmer (221) verbunden ist.

10. Drehmesseinrichtung (200) gemäß Anspruch 9, **dadurch gekennzeichnet, dass**
- der rotative Maßkörper (240) als Zahnrad (242) ausgebildet ist, insbesondere ein Messmerkmal (250) als eine Zahn-Tal-Paarung (254) aus einem Zahnkopf (256) und einem Zahntal (258) ausgebildet ist.

11. Drehmesssystem (300), bevorzugt für ein Fahrzeug (1000), **gekennzeichnet durch**
- mindestens eine Drehmesseinrichtung (200) nach Anspruch 9 oder 10,
- eine Zuordnungseinheit (1200), die ausgebildet ist, die an einer festen Sequenzposition (PSF) der Nachrichtensequenz (110) angeordnete Nachricht (120) vorbestimmter Art, insbesondere eine Statusnachricht (124) einer Nachrichtensequenz (110), einem Messmerkmal (250) zuzuordnen.

12. Drehmesssystem (300) gemäß Anspruch 11, **dadurch gekennzeichnet, dass** die Zuordnung in Form eines Wertetupels (130), auf Basis der Nachrichtenanzahl (A), vorzugsweise nach einem zugeordneten Datenprotokoll (100), gegeben ist.

13. Drehmesssystem (300) gemäß Anspruch 11 oder 12, **gekennzeichnet durch**
- einen Zuordnungsspeicher (1240), insbesondere Zuordnungstabelle (1242), der ausgebildet ist, für ein oder mehrere Messmerkmale (250) jeweils eine zugeordnete Nachricht vorbestimmter Art (123), insbesondere das Wertetupel (130), zu hinterlegen.

14. Drehmesssystem (300) gemäß einem der Ansprüche 11 bis 13, **gekennzeichnet durch**
- eine Diagnoseeinheit (1260), ausgebildet zum Erkennen von einem Fehlerzustand (ZF) und/oder einem Betriebszustand (ZB) in Abhängigkeit des mindestens einen, der Nachricht vorbestimmter Art (123) zugeordneten, Messmerkmals (250), insbesondere in Abhängigkeit des mindestens einen Wertetupels (130).

15. Fahrzeug (1000), aufweisend eine Drehmesseinrichtung (200), insbesondere für eine Welle oder ein Rad des Fahrzeugs (1000), nach einem der Ansprüche 9 oder 10 und/oder ein Drehmesssystem (300) nach einem der Ansprüche 11 bis 14.

## Claims

1. Signal-processing device (260), preferably for a vehicle (1000), for signal processing for a rotation-measuring device (200), which rotation-measuring device has a rotation-measuring sensor (220) and a rotary measuring body (240), wherein the rotary measuring body (240) has a feature quantity (AM) of measurement features (250), wherein
- for signal processing, the signal-processing device (260) is configured to provide temporally successive message sequences (110), and
- a message sequence (110) has a message quantity (A) of successive messages (120) such that
- temporally successive messages (120) are assigned in temporal succession to spatially adjacent measurement features (250), wherein the measurement features (250) interact with the rotation-measuring sensor (220), and each message (120) is provided in a message type (NT, C, T, P) selected from a predetermined quantity of message types, and
- a message (120) arranged at a fixed sequence position (PSF) of the message sequence (110) is a message of a predetermined type (123) which describes a feature property (280) of the assigned measurement feature (250),
**characterized in that**
- the signal-processing device (260) is configured to generate the message sequences (110) such that the message quantity (A) and the feature quantity (AM) are relatively prime.

2. Signal-processing device (260) according to claim 1,
**characterized in that** a quotient of the feature quantity (AM) and the message quantity (A) is not an integer.

3. Signal-processing device (260) according to claim 1 or 2,
**characterized in that**
- the message quantity (A) is a prime number, in particular a smaller or smallest prime number not occurring in the prime factorization of the feature quantity (AM).

4. Signal-processing device (260) according to any of claims 1 to 3,
**characterized in that**
- each message sequence (110) is generated such that the message quantity (A) and the feature quantity (AM) are relatively prime, and/or
- the message quantity (A) of successive messages (120) are provided in an order (RF) predetermined by an assigned data protocol (100) and the successive message sequences (110) are provided in an order predetermined by the assigned data protocol (100).

5. Signal-processing device (260) according to any of claims 1 to 4,
**characterized in that**
- the message (120) of predetermined type (123) is a status message (124) according to a data protocol (100), in particular, a last message (120) of the message sequence (110) is the status message (124).

6. Signal-processing device (260) according to any of the preceding claims, **characterized in that**
- a first message sequence type (110.1) and a second message sequence type (110.2) succeed one another alternately, wherein the first message sequence type (110.1) has a first status message (124.1), in particular a peak-to-peak message (125), and the second message sequence type (110.2) has a second status message (124.2), in particular a temperature message (126).

7. Signal-processing device (260) according to any of the preceding claims, **characterized in that** a data protocol (100) is an AK protocol (102), in particular the message quantity (A) is seven.

8. Signal-processing device (260) according to any of the preceding claims, **characterized by** an electrical interface for connection to a separate electrical line to the rotation-measuring sensor (240).

9. Rotation-measuring device (200) for a rotating part (1100), preferably for a vehicle (1000), particularly preferably for a shaft or a wheel (540) of a vehicle (1000), having:
- a rotation-measuring sensor (220),
- a rotary measuring body (240) which has a feature quantity (AM) of measurement features (250), in particular wherein the measurement features (250) are arranged along a circular path (248) and/or equidistantly,
- a signal-processing device (260) according to any of claims 1 to 8, which is connected to the measured-value sensor (221) in a signal-carrying manner.

10. Rotation-measuring device (200) according to claim 9, **characterized in that**
- the rotary measuring body (240) is configured as a gear wheel (242), in particular a measurement feature (250) is configured as a tooth-root pairing (254) consisting of a tooth tip (256) and a tooth root (258).

11. Rotation-measuring system (300), preferably for a vehicle (1000),
**characterized by**
- at least one rotation-measuring device (200) according to claim 9 or 10,
- an assignment unit (1200) which is configured to assign the message (120) of a predetermined type arranged at a fixed sequence position (PSF) of the message sequence (110), in particular a status message (124) of a message sequence (110), to a measurement feature (250).

12. Rotation-measuring system (300) according to claim 11,
**characterized in that** the assignment is given in the form of a value tuple (130), based on the message quantity (A), preferably according to an assigned data protocol (100).

13. Rotation-measuring system (300) according to claim 11 or 12,
**characterized by**
- an assignment memory (1240), in particular an assignment table (1242), which is configured to store an assigned message of a predetermined type (123), in particular the value tuple (130), for each of one or more measurement features (250).

14. Rotation-measuring system (300) according to any of claims 11 to 13, **characterized by**
- a diagnostic unit (1260) configured to detect an error state (ZF) and/or an operating state (ZB) on the basis of the at least one measurement feature (250) assigned to the message of a predetermined type (123), in particular on the basis of the at least one value tuple (130).

15. Vehicle (1000), comprising a rotation-measuring device (200), in particular for a shaft or a wheel of the vehicle (1000), according to any of claims 9 or 10 and/or a rotation-measuring system (300) according to any of claims 11 to 14.

## Revendications

1. Dispositif de traitement de signal (260), de préférence pour un véhicule (1000), destiné au traitement de signal pour un dispositif de mesure de rotation (200) comportant un capteur de mesure de rotation (220) et un corps de mesure rotatif (240), dans lequel le corps de mesure rotatif (240) présente un nombre de caractéristiques (AM) de caractéristiques de mesure (250), dans lequel
- pour le traitement de signal, le dispositif de traitement de signal (260) est conçu pour mettre à disposition des séquences de messages (110) se succédant dans le temps, et
- une séquence de messages (110) présente un nombre de messages (A) de messages (120) se succédant, de telle sorte que
- des messages (120) se succédant dans le temps sont associés successivement dans le temps à des caractéristiques de mesure (250) localement voisines, dans lequel les caractéristiques de mesure (250) interagissent avec le capteur de mesure de rotation (220), et chaque message (120) est mis à disposition dans un type de message (NT, C, T, P) sélectionné parmi un nombre prédéterminé de types de message, et
- un message (120) disposé à une position de séquence fixe (PSF) de la séquence de messages (110) est un message de type prédéterminé (123) qui décrit une propriété caractéristique (280) de la caractéristique de mesure (250) associée,
**caractérisé en ce que**
- le dispositif de traitement de signal (260) est conçu pour générer les séquences de messages (110) de telle sorte que le nombre de messages (A) et le nombre de caractéristiques (AM) sont des nombres relativement premiers.

2. Dispositif de traitement de signal (260) selon la revendication 1, **caractérisé en ce qu'**un quotient du nombre de caractéristiques (AM) et du nombre de messages (A) n'est pas un nombre entier.

3. Dispositif de traitement de signal (260) selon la revendication 1 ou 2,
**caractérisé en ce que**
- le nombre de messages (A) est un nombre premier, en particulier un nombre premier plus petit ou le plus petit qui n'apparaît pas dans la décomposition en facteurs premiers du nombre de caractéristiques (AM).

4. Dispositif de traitement de signal (260) selon l'une des revendications 1 à 3, **caractérisé en ce que**
- chaque séquence de messages (110) est générée de telle sorte que le nombre de messages (A) et le nombre de caractéristiques (AM) sont des nombreux relativement premiers, et/ou
- le nombre de messages (A) de messages (120) se succédant est prévu dans un ordre (RF) prédéterminé par un protocole de données (100) associé et les séquences de messages (110) se succédant sont prévues dans un ordre prédéterminé par le protocole de données (100) associé.

5. Dispositif de traitement de signal (260) selon l'une des revendications 1 à 4, **caractérisé en ce que**
- le message (120) de type prédéterminé (123) est un message d'état (124) selon un protocole de données (100), en particulier un dernier message (120) de la séquence de messages (110) est le message d'état (124).

6. Dispositif de traitement de signal (260) selon l'une des revendications précédentes, **caractérisé en ce**
- **qu'**un premier type de séquence de messages (110.1) et un deuxième type de séquence de messages (110.2) se succèdent en alternance, dans lequel le premier type de séquence de messages (110.1) présente un premier message d'état (124.1), en particulier un message crête-à-crête (125), et le deuxième type de séquence de messages (110.2) présente un deuxième message d'état (124.2), en particulier un message de température (126).

7. Dispositif de traitement de signal (260) selon l'une des revendications précédentes, **caractérisé en ce qu'**un protocole de données (100) est un protocole AK (102), en particulier le nombre de messages (A) est de sept.

8. Dispositif de traitement de signal (260) selon l'une des revendications précédentes, **caractérisé par** une interface électrique pour la connexion à une ligne électrique séparée vers le capteur de mesure de rotation (240).

9. Dispositif de mesure de rotation (200) pour une pièce rotative (1100), de préférence pour un véhicule (1000), de manière particulièrement préférée pour un arbre ou une roue (540) d'un véhicule (1000), présentant :
- un capteur de mesure de rotation (220),
- un corps de mesure rotatif (240) comportant un nombre de caractéristiques (AM) de caractéristiques de mesure (250), en particulier dans lequel les caractéristiques de mesure (250) sont disposées le long d'une trajectoire circulaire (248) et/ou de manière équidistante,
- un dispositif de traitement de signal (260) selon l'une des revendications 1 à 8, qui est relié au capteur de valeur de mesure (221) de manière à conduire le signal.

10. Dispositif de mesure de rotation (200) selon la revendication 9,
**caractérisé en ce que**
- le corps de mesure rotatif (240) est réalisé sous la forme d'une roue dentée (242), en particulier une caractéristique de mesure (250) est réalisée sous la forme d'un couple dent/vallée (254) constitué d'une tête de dent (256) et d'une vallée de dent (258).

11. Système de mesure de rotation (300), de préférence pour un véhicule (1000), **caractérisé par**
- au moins un dispositif de mesure de rotation (200) selon la revendication 9 ou 10,
- une unité d'association (1200) qui est conçue pour associer à une caractéristique de mesure (250) le message (120) de type prédéterminé disposé à une position de séquence fixe (PSF) de la séquence de messages (110), en particulier un message d'état (124) d'une séquence de messages (110).

12. Système de mesure de rotation (300) selon la revendication 11, **caractérisé en ce que** l'association est donnée sous la forme d'un tuple de valeurs (130), sur la base du nombre de messages (A), de préférence selon un protocole de données (100) associé.

13. Système de mesure de rotation (300) selon la revendication 11 ou 12, **caractérisé par**
- une mémoire d'association (1240), en particulier un tableau d'association (1242), qui est conçu pour enregistrer, pour une ou plusieurs caractéristiques de mesure (250), respectivement un message associé de type prédéterminé (123), en particulier le tuple de valeurs (130).

14. Système de mesure de rotation (300) selon l'une des revendications 11 à 13, **caractérisé par**
- une unité de diagnostic (1260), conçue pour la reconnaissance d'un état d'erreur (ZF) et/ou d'un état de fonctionnement (ZB) en fonction de l'au moins une caractéristique de mesure (250) associée au message de type prédéterminé (123), en particulier en fonction de l'au moins un tuple de valeurs (130).

15. Véhicule (1000) présentant un dispositif de mesure de rotation (200), en particulier pour un arbre ou une roue du véhicule (1000), selon l'une des revendications 9 ou 10 et/ou un système de mesure de rotation (300) selon l'une des revendications 11 à 14.
